# EUROPÄISCHE PATENTSCHRIFT

(11) **EP 3 074 437 B1**
(45) Veröffentlichungstag und Bekanntmachung des Hinweises auf die Patenterteilung: **17.01.2018**
(21) Anmeldenummer: 14811787.2
(22) Anmeldetag: 24.11.2014
(51) Int. Cl.: C08F 220/24, C08G 18/79, C08G 18/80, C08G 18/28, C09D 175/04, C08L 75/04, D06N 3/00

(54) **AUSRÜSTUNGSMITTEL MIT BLOCKIERTEN POLYISOCYANATEN**
FINISHING AGENT WITH BLOCKED POLYISOCYANATES
APPRÊT AVEC POLYISOCYANATES BLOQUÉS

(30) Priorität: 26.11.2013 DE 102013224140
(43) Veröffentlichungstag der Anmeldung: 05.10.2016
(73) Patentinhaber: Rudolf GmbH, 82538 Geretsried (DE)
(72) Erfinder: SIELEMANN, Dirk, 82515 Wolfratshausen (DE); ALBERT, Christine, 83052 Bruckmühl (DE); DUSCHEK, Gunther, 83671 Benediktbeuern (DE)
(74) Vertreter: Weickmann & Weickmann PartmbB
(86) Internationale Anmeldenummer: PCT/EP2014/075397
(87) Internationale Veröffentlichungsnummer: WO 2015/078811

(56) Entgegenhaltungen:
- EP-A1- 1 375 550
- US-A1- 2003 232 199

## Beschreibung

Die Erfindung betrifft Zubereitungen enthaltend mindestens ein blockiertes Polyisocyanat und mindestens ein oleophobierendes und/oder hydrophobierendes Ausrüstungsmittel sowie die Verwendung der Zubereitung zur oleophoben und/oder hydrophoben Ausrüstung von Flächengebilden, insbesondere von Textilien.

Zum Erzeugen von wasser- bzw. ölabweisenden Effekten auf Textilien werden üblicherweise Zubereitungen auf Basis von Organopolysiloxanen, Polyurethanen, modifizierten Melaminharzen, Wachsen, Paraffin und/oder Fluorcarbonpolymeren verwendet.

Während mit fluorfreien Zubereitungen lediglich eine Hydrophobierung des Textils erreicht werden kann, führen fluorhaltige Zubereitungen zusätzlich zu einer Ölabweisung. Üblicherweise basieren fluorhaltige Zubereitungen für die wasserabweisende und ölabweisende Ausrüstung auf Fluorcarbonpolymeren, insbesondere auf Polyurethan- oder Poly(meth)acrylat-Systemen, welche Perfluoralkylgruppen enthalten.

Die verwendeten Poly(meth)acrylat-Systeme werden meistens aus Perfluoralkyl(meth)acrylat-Monomeren aufgebaut. Da diese Monomere aus einem Telomerisationsprozess hervorgehen, werden überwiegend Gemische von Monomeren mit Perfluoralkylresten unterschiedlicher Kettenlänge (C₄ - C₁₀) eingesetzt. Bevorzugt wurden bisher Monomermischungen benutzt, die einen Perfluoralkylrest mit durchschnittlich acht Kohlenstoff-Atomen aufweisen.

Aus ökologischen bzw. toxikologischen Gründen geht man heutzutage jedoch dazu über fluorierte Monomerbausteine einzusetzen, die Perfluoralkylreste mit maximal sechs Kohlenstoffatomen besitzen. Solche Mono- bzw. Polymere werden z.B. in EP 2057201 und EP 1298180 beschrieben.

Neben den perfluorierten Monomeren kommen zur Synthese der Oleo- und Hydrophobierungsmittel nicht-fluorierte Comonomere, wie z.B. C₁₂₋₂₂-Alkyl(meth)acrylate, Vinylchlorid, Vinylidenchlorid und/oder Styrol zum Einsatz. Des weiteren werden Comonomere eingesetzt, die eine vernetzbare Gruppe enthalten. Eine vernetzbare Gruppe ist in der Lage mit dem auszurüstenden Flächengebilde und/oder einem externen Vernetzer (multifunktionelle Verbindung) zu reagieren.

Die zur Oleo- und Hydrophobierung eingesetzten Polyurethan-Systeme werden ausgehend von Fluortelomeralkoholen hergestellt. Dabei werden Polyisocyanate oder Isocyanatgruppen-enthaltende Prepolymere mit Fluortelomeralkoholen zur Reaktion gebracht.

Sowohl die Poly(meth)acrylat- als auch die Polyurethan-Systeme, die auf Monomeren mit maximal sechs perfluorierten Kohlenstoffatomen basieren, zeigen im Vergleich zu den Zubereitungen die auf Monomerbausteine mit durchschnittlich acht perfluorierten Kohlenstoffatomen basieren ein niedrigeres Effektniveau. Dies ist darauf zurückzuführen, dass der perfluorierte C₆-Alkylrest ein geringer ausgeprägtes Kristallisationsverhalten aufweist.

Neben den fluorhaltigen Systemen gibt es fluorfreie Zubereitungen mit denen sich hydrophobe jedoch keine oleophoben Effekte erzielen lassen. So werden häufig wässrige Emulsionen aus hydrophoben Substanzen eingesetzt. Dabei handelt es sich z.B. um Polyethylen-, Paraffin-, Fischer-Tropsch-Wachse oder Metallseifen. Auch Fette und Wachse natürlichen Ursprungs wie z.B. Carnaubawachs, Bienenwachs oder Wollwachs können verwendet werden. So sind aus DE 10211549 Zubereitungen bekannt, die aus einer synthetischen oder natürlichen Wachskomponente (z.B. Bienenwachs, Carnaubawachs, Polyethylenwachs oder Fischer-Tropsch-Wachs) und einem hochverzweigtem Polyurethan bestehen. Besonders bevorzugt sind lineare Paraffinwachse. Ähnliche Systeme, die anstelle der Wachskomponente ein Organopolysiloxan enthalten, sind in DE 102007020790 beschrieben.

In DE 1017133 werden Hydrophobierungsmittel aus einer Mischung eines Kondensationsprodukts aus Hexamethylolmelaminhexamethylether, Stearinsäure, Stearinsäurediglycerid und Triethanolamin mit Paraffin beschrieben.

Verfahren zur Hydrophobierung von Textilien durch Auftragen von vernetzbaren Organopolysiloxanen sind auch bekannt. Die Vernetzung kann durch Kondensation von Si-H-und Si-OH-funktionellen Organopolysiloxanen mit Hilfe eines Katalysators wie z.B. in US 4098701 beschrieben, erfolgen. Ebenso ist eine Vernetzung durch eine Anlagerung von Si-H-funktionellen Organopolysiloxanen an SiC-gebundene olefinische Reste möglich (vgl. z.B. US 4154714 und DE 3332997). Aufgrund des reaktiven Charakters der Organopolysiloxane ist die Herstellung lagerstabiler Zubereitungen aber schwierig. Häufig können die Komponenten erst direkt vor der Verwendung gemischt werden, was die Handhabung in der Praxis umständlich macht.

EP 2152957 beschreibt Fluorcarbonpolymer-freie Zubereitungen auf Basis von Organopolysiloxanen und Polyurethanen, die zur wasserabweisenden Ausrüstung von Textilien verwendet werden.

Die oben beschriebenen Oleo- und Hydrophobierungsmittel für Textilien werden bei der Ausrüstung häufig mit blockierten Polyisocyanaten formuliert. Bei blockierten Isocyanaten sind die reaktiven Isocyanatgruppen mit Schutzgruppen umgesetzt, so dass keine Reaktion der Isocyanatgruppe bei üblichen Lagerbedingungen (z.B. 0-80°C) zu beobachten ist. Durch Aktivierung der blockierten Isocyanate, z.B. durch erhöhte Temperatur (sog. Deblockierungstemperatur, z.B. >80°C) kann die Schutzgruppe unter Rückbildung der Isocyanatgruppe abgespalten werden. Die erhaltenen Isocyanatgruppen sind in der Lage das Hydrophobierungsmittel zu vernetzen bzw. an das textile Substrat zu binden, wobei der Zeitpunkt der Vernetzung bzw. Bindung durch Einstellen der Aktivierungsbedingungen beliebig gewählt werden kann. Auf diese Weise kann das Effektniveau der derart ausgerüsteten Materialien deutlich erhöht werden, und die Abrieb- und Waschbeständigkeit erheblich verbessert werden.

Die wichtigsten Verbindungen, die im textilen Bereich zur Blockierung von Polyisocyanaten verwendet werden, sind Butanonoxim und 3,5-Dimethylpyrazol. Mit Butanonoxim werden überwiegend aromatische Polyisocyanate blockiert, da die daraus resultierenden Systeme eine für den Ausrüster noch vertretbare Deblockierungstemperatur besitzen. Ein Nachteil der aromatischen Verbindungen ist aber ihre starke Neigung zur Vergilbung auf dem Textil. Außerdem ist Butanonoxim als potentiell krebserregend eingestuft, so dass bei der Applikation und Aktivierung entsprechende Sicherheitsvorkehrungen notwendig sind.

Alternativ wird 3,5-Dimethylpyrazol als Blockierungsmittel verwendet, das insbesondere für aliphatische Polyisocyanate geeignet ist. Aromatische Polyisocyanate werden dagegen selten mit 3,5-Dimethylpyrazol blockiert, da in diesem Fall die Deblockierungstemperatur zu niedrig ist, um bei Raumtemperatur stabile wässrige Zubereitungen zu erhalten. Auch 3,5-Dimethylpyrazol steht im Verdacht gesundheitsschädlich zu sein.

In DE 69927679 werden selbstdispergierbare Pyrazolderivat-blockierte Polyisocyanate offenbart, die als Hilfsmittel bei der Ausrüstung von Fasermaterialien mit oleophobierenden und/oder hydrophobierenden Ausrüstungsmitteln eingesetzt werden. Um die Dispergierbarkeit der blockierten Polyisocyanate zu gewährleisten, enthalten diese hydrophile Polyalkylenoxidgruppen. Nachteilig bei den beschriebenen Systemen ist die hydrophile Gruppe, die dem gewünschten wasserabweisenden Effekt der Verbindung entgegenwirkt. Nachteilig ist auch die verwendete Schutzgruppe 3,5-Dimethylpyrazol, die einen hohen Schmelz- und Siedepunkt besitzt, weshalb bei sehr hohen Temperaturen getrocknet bzw. kondensiert werden muss, um sicherzustellen, dass kein Blockierungsmittel auf dem Textil verbleibt. Dies gilt es zu vermeiden, da 3,5-Dimethylpyrazol im Verdacht steht fruchtschädigend zu sein. Untersuchungen haben aber gezeigt, dass eine kleine Restmenge an 3,5-Dimethylpyrazol grundsätzlich auf derart ausgerüsteten Textilien verbleibt.

EP 2599848 beschreibt eine wasser- und ölabweisende Zusammensetzung, die ein Pyrazol-blockiertes Polyisocyanat, ein nichtionogenes Tensid und eine wasser- und ölabweisende Komponente umfasst. Wie oben ausgeführt gilt es, jegliche Art von Pyrazol-haltigen Blockierungsmitteln zu vermeiden.

EP 1375552 beschreibt wässrige oder wasserverdünnbare Polyisocyanate, die mit sekundären Benzylaminen blockiert sind und als Vernetzer in Einbrennlacken verwendet werden. Die blockierten Polyisocyanate enthalten eine hydrophile Gruppe, um die Verbindung in Wasser emulgieren bzw. dispergieren zu können. Als Hydrophilierungsmittel werden kationische, anionische und/oder nichtionogene Gruppen in großen Mengen in das Polymer eingebaut. Derartige Systeme sind nicht für die Verwendung als Vernetzer zur Hydrophobierung von Textilien geeignet, da die hydrophilen Gruppen auf dem Textil eine stark rücknetzende Wirkung zeigen, so dass der gewünschte wasserabweisende Effekt nicht erreicht werden kann.

EP 1375551 beschreibt mit sekundären Benzylaminen blockierte Polyisocyanate, die als selbstvernetzende Einkomponenten-Einbrennsysteme verwendet werden.

EP 1375550 beschreibt Schlichtezusammensetzungen, die unter anderem auch wasserdispergierbare bzw. wasserlösliche und mit Aralkylaminen blockierte Polyisocyanate enthalten.

US 2003/0232199 offenbart Polyurethan-Polyharnstoff-Dispersionen, die Aralkylamin-blockierte Isocyanatgruppen enthalten.

Aufgabe der vorliegenden Erfindung ist daher die Bereitstellung einer Zubereitung, die verbesserte oleo- und/oder hydrophobierende Effekte verleiht und toxikologisch unbedenklich ist.

Diese Aufgabe wurde durch die Bereitstellung einer Zubereitung enthaltend
(i) mindestens ein blockiertes Polyisocyanat der Formel (I) 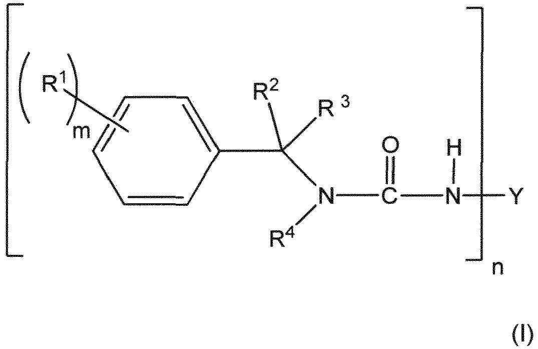 wobei
   R¹ unabhängig voneinander Wasserstoff, C₁-C₄-Alkyl oder C₆-C₁₀-Cycloalkyl, bevorzugt Wasserstoff ist,
   R² unabhängig voneinander Wasserstoff, C₁-C₄-Alkyl oder C₆-C₁₀-Cycloalkyl, bevorzugt Wasserstoff ist,
   R³ unabhängig voneinander Wasserstoff, C₁-C₄-Alkyl oder C₆-C₁₀-Cycloalkyl, bevorzugt Wasserstoff ist,
   R⁴ unabhängig voneinander C₁-C₄-Alkyl, C₆-C₁₀-Cycloalkyl oder C₇-C₁₄-Aralkyl, bevorzugt Methyl, Ethyl, Propyl, Isopropyl, n-Butyl, sek-Butyl, tert-Butyl, stärker bevorzugt tert-Butyl ist,
   m eine ganze Zahl ausgewählt aus 1, 2, 3, 4 oder 5 ist,
   n eine Zahl von 2 bis 10, bevorzugt von 2 bis 8, stärker bevorzugt von 2 bis 6 ist, und
   Y ein Rest eines Polyisocyanats ist, der mit einer hydrophoben und gegebenenfalls einer anionischen, kationischen und/oder nicht ionischen Gruppe substituiert ist, wobei die hydrophobe Gruppe ein linearer, zyklischer oder verzweigter, gesättigter oder zumindest teilweise ungestättigter Kohlenwasserstoffrest mit 8-24 Kohlenstoffatomen ist; und
(ii) mindestens ein oleophobierendes und/oder hydrophobierendes Ausrüstungsmittel,
gelöst.

In einer bevorzugten Ausführungsform sind R¹, R² und R³ jeweils H und R⁴ ist tert-Butyl.

Y ist bevorzugt ein aliphatischer, cycloaliphatischer und/oder aromatischer Kohlenwasserstoffrest mit 6-200 Kohlenstoffatomen, bevorzugt 6-150 Kohlenstoffatomen, stärker bevorzugt 6-120 Kohlenstoffatomen, der ggf. mindestens eine Urethan-, Allophanat-, Harnstoff-, Biuret-, Uretdion-, Isocyanurat-, Carbodiimid-, Iminooxadiazindion und/oder Uretonimin-Gruppe enthält.

Die blockierten Polyisocyanate sind erhältlich durch Umsetzung des Benzylamins der Formel (IV) 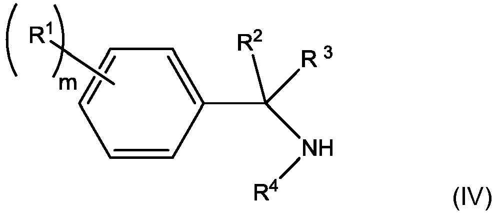 mit einem Polyisocyanat, wobei R¹-R⁴, m und n wie oben definiert sind. Bevorzugte Benzylaminderivate sind N-Methyl-, N-Ethyl-, N-Isopropyl-, N-Propyl-, N-Butyl-, N-Isobutyl- und N-tert-Butyl- und 1,1-Dimethyl-Benzylamin. Bevorzugt wird tert-Butyl-Benzylamin eingesetzt, um die Isocyanatgruppen des Polyisocyanats zu blockieren. In einer Ausführungsform kann das Polyisocyanat mit unterschiedlichen Benzylaminderivaten der Formel (IV) blockiert werden.

Als Polyisocyanat wird im Sinne der Erfindung ein Grundgerüst mit mindestens zwei freien Isocyanatgruppen angesehen. Der Rest Y stellt somit ein Grundgerüst eines Polyisocyanats (ohne die blockierten Isocyanatgruppen -NHCO-Benzylaminderivat) dar. In einer bevorzugten Ausführungsform ist Y ein Grundgerüst eines aliphathischen, cycloaliphatischen oder aromatischen Polyisocyanats. Bevorzugte Beispiele für aliphatische Polyisocyanate sind Hexamethylendiisocyanat, 2,2,4-Trimethyl-hexamethylendiisocyanat und 2,4,4-Trimethyl-hexamethylen-diisocyanat, insbesondere Hexamethylendiisocyanat.

Bevorzugte cycloaliphatische Polyisocyanate sind Isophorondiisocyanat, Methylen-bis(4-cyclohexylisocyanat), 2,4-Cyclohexyldiisocyanat und 2,6-Cyclohexyldiisocyanat, insbesondere Isophorondiisocyanat.

Bevorzugte aromatische Polyisocyanate sind Toluylendiisocyanat (z.B. 2,4-TDI oder 2,6-TDI), (polymeres) Diphenylmethandiisocyanat (z.B. 4,4'-MDI, 2,4'-MDI, 2,2'-MDI), Naphthalin-1,5-diisocyanat (NDI), 4,4',4"Triisocyanattriphenylmethan und Tetraisocyanat, insbesondere Toluylendiisocyanat und Diphenylmethandiisocyanat.

Als Rest Y können als Grundgerüst auch Umsetzungsprodukte der o.g. Polyisocyanate verwendet werden, die bevorzugt durch Reaktion eines Teils der Isocyanatgruppen des Polyisocyanats miteinander, mit Mono-, Dialkoholen, Mono-, Diaminen, Alkoholaminen, Wasser und/oder Carbonsäuren erhalten werden. Solche oligomeren Grundgerüste enthalten mindestens eine Urethan-, Allophanat-, Harnstoff-, Biuret-, Uretdion-, Isocyanurat-, Carbodiimid-, Iminooxadiazindion und/oder Uretonimin-Gruppe. Grundsätzlich müssen die oligomeren Umsetzungsprodukte mindestens zwei freie Isocyanatgruppen aufweisen, die dann mit Benzylaminderivat (IV) zum blockierten Polyisocyanat (I) umgesetzt werden können.

Bevorzugt werden als Grundgerüst Polyurethanpräpolymere verwendet. Dabei handelt es sich um oligomere Umsetzungsprodukte der o.g. aromatischen, aliphatischen und/oder cycloaliphatischen Polyisocyanate mit mehrwertigen Alkoholen oder mehrwertigen Aminen, wie z.B. Trimethylolpropan, Glycerin, C₁₋₁₂-Diol und/oder C₁₋₁₂- Diamin. Die Reaktion ist so einzustellen, dass das Präpolymer freie Isocyanatgruppen aufweist (NCO-Präpolymer), die dann mit dem Benzylaminderivat blockiert werden und ein blockiertes Polyisocyanat der Formel (I) ergeben.

Bevorzugt wird als Rest Y auch ein Grundgerüst von Hexamethylendiisocyanat-Trimerisat, Hexamethylendiisocyanat-Biuret oder Isophorondiisocyanat-Trimerisat verwendet.

Besonders bevorzugt ist der Rest Y ein Grundgerüst eines Hexamethylen-diisocyanat-Trimerisats, Hexamethylendiisocyanat-Biurets, Isophorondiisocyanat-Trimerisats, eines aliphatischen, cycloaliphatischen oder aromatischen Polyisocyanats, eines Umsetzungsprodukts der o.g. Polyisocyanate, die bevorzugt durch Reaktion eines Teils der Isocyanatgruppen des Polyisocyanats miteinander, mit Mono-, Dialkoholen, Mono-, Diaminen, Alkoholaminen, Wasser und/oder Carbonsäuren enthalten werden oder eines NCO-Präpolymers.

Der Rest Y ist ferner mit einer hydrophoben und ggf. anionischen, kationischen und/oder nicht-ionischen Gruppe substituiert. Dabei ist die hydrophobe und/oder anionische, kationische und/oder nicht-ionische Gruppe bevorzugt über eine Urethan- und/oder über eine Harnstoff-Gruppe an den Rest Y gebunden.

Die hydrophobe Gruppe ist ein linearer, zyklischer oder verzweigter, gesättigter oder zumindest teilweise ungesättigter Kohlenwasserstoffrest mit 8-24, bevorzugt 12-22 Kohlenstoffatomen. Dabei ist die hydrophobe Gruppe bevorzugt über eine Urethan- und/oder über eine Harnstoff-Gruppe an den Rest Y gebunden. Die hydrophobe Gruppe wird bevorzugt über die Reaktion eines Fettalkohols und/oder Fettamins mit einer Isocyanatgruppe des Polyisocyanats eingeführt. Bevorzugte hydrophobe Gruppen sind somit Oktan-, 2-Ethylhexan-, Dekan-, Isodekan-, Lauryl-, Isotridekan-, Myristyl-, Cetyl-, Stearyl- und Behenyl-Gruppen, bevorzugt Lauryl-, Isotridekan-, Myristyl-, Cetyl-, Stearyl- und Behenyl-, insbesondere bevorzugt Lauryl-, Cetyl-, Stearyl-, und Behenyl-Gruppen. Der Anteil der hydrophoben Gruppen macht bevorzugt einen Anteil von 2 bis 20 Molprozent, bevorzugt 2 bis 10 Molprozent, bezogen auf die ursprünglich zur Verfügung stehenden freien Isocyanatgruppen im Polyisocyanat aus.

Ferner kann der Rest Y mit einer anionischen, kationischen und/oder nicht-ionischen Gruppe substituiert sein. Bevorzugt sind diese Gruppen über eine Urethan- und/oder eine Harnstoffgruppe an den Rest Y des Polyisocyanats gebunden. Die geringen Anteile an anionischen, kationischen und/oder nicht-ionischen Gruppe bewirken eine verbesserte Emulsionstabilität des blockierten Polyisocyanats bei Anwendungen mit hohen Scherkräften.

Die kationische Gruppe umfasst bevorzugt ein quaternäres Ammoniumion oder ein Ammoniumsalz. Die Anbindung der kationischen Gruppe an den Rest Y erfolgt üblicherweise durch Reaktion einer Isocyanatgruppe des Polyisocyanats mit einer Verbindung, die neben einem sec- oder *tert-* Amin oder quaternärem Ammoniumion ein isocyanatreaktives Wasserstoffatom aufweist. Bevorzugt sind solche Verbindungen C₁₋₁₀-Alkanol-sek/tert-amine, wie z.B. N-Methyldiethanolamin und N,N-Dimethylethanolamin. Die sekundären Amine können entweder durch Protonierung in die entsprechenden Ammoniumsalze überführt werden oder durch Methylierungsmittel, wie z.B. Dimethylsulfat, Methylchlorid, Methyltosylat oder Benzylchlorid quaternisiert werden. Bevorzugte kationische Gruppen sind daher -L-NR⁵R⁶H⁺ oder -L-NR⁵R⁶R⁷⁺, wobei L ein Spacer ist. L ist bevorzugt C₁₋₁₀-Alkyl, das ggf. mit OH substituiert ist. R⁵, R⁶ und R⁷ sind unabhängig voneinander H und C₁₋₆-Alkyl, ggf. substituiert mit OH und/oder COOH.

Die anionische Gruppe umfasst bevorzugt ein Carboxylat und/oder ein Sulfonat. Die Anbindung der anionischen Gruppe an den Rest Y erfolgt üblicherweise durch Reaktion einer Isocyanatgruppe des Polyisocyanats mit einer Verbindung, die neben einer Carbonsäure- und/oder Sulfonsäure-Gruppe ein isocyanatreaktives Wasserstoffatom aufweist. Bevorzugt sind solche Verbindungen Aminosäuren, z.B. Glycin und Mono- oder Dihydroxycarbonsäuren, wie z.B. Glykolsäure, Dimethylolproprionsäure und Hydroxypivalinsäure. Die Carbonsäuren können durch Zugabe von Base, z.B. NaOH, KOH und/oder tertiärem Amin in das Carboxylat und/oder Sulfonat überführt werden.

Bevorzugte anionische Gruppen sind -L-COO- oder -L-SO₃⁻, wobei L ein Spacer ist. L ist bevorzugt C₁₋₁₀-Alkyl, das ggf. mit OH substituiert ist.

Als nicht-ionische Gruppe wird bevorzugt ein Polyalkylenoxid, bevorzugt mit einem gewichtsmittleren Molekulargewicht von 200-2000 g/mol, bevorzugt 400-1000 g/mol verwendet. Bevorzugte Polyalkylenoxide sind Methylpolyethylenglykol (MPEG), Methylpolypropylenglykol oder Mischformen dieser beiden, insbesondere Methylpolyethylenglykol. Der Einbau der nichtionischen Gruppe an den Rest Y erfolgt überlicherweise durch Reaktion einer Isocyanatgruppe des Polyisocyanates mit einem Polyalkylenoxid, das ein isocyanatreaktives Wasserstoffatom aufweist.

Der Anteil der anionischen, kationischen und/oder nicht-ionischen macht bevorzugt einen Anteil von 0 bis 10 Molprozent, bevorzugt 0 bis 7 Molprozent, stärker bevorzugt 0,01 bis 7 Molprozent, bezogen auf die ursprünglich zur Verfügung stehenden freien Isocyanatgruppen im Polyisocyanat aus.aus. Ein höherer Anteil an anionischen, kationischen und/oder nicht-ionischen Gruppen wirkt sich nachteilig aus, da diese Gruppen dem hydrophobierenden Effekt entgegenwirken.

In einer bevorzugten Ausführungsform hat das blockierte Polyisocyanat die Formel (II) 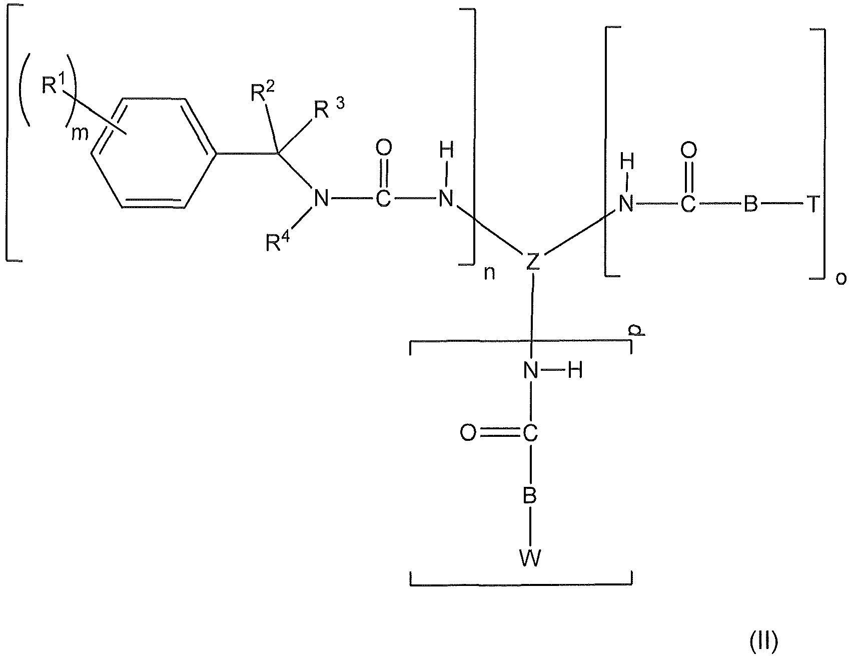 wobei
- Z: ein Rest eines Polyisocyanats ist,
- T: eine hydrophobe Gruppe ist, W eine kationische, anionische und/oder nichtionische Gruppe umfasst,
- B: -O- und/oder -NH- ist,
- o: 0,1 bis 4, bevorzugt 0,1 bis 1, ist, und
- p: 0 bis 1, bevorzugt 0,1- 0,5 ist.

Z entspricht dem oben definierten Rest Y, der notwendigerweise mit einer hydrophoben Gruppe substituiert ist. Die Substituenten R¹ bis R⁴, m und n sind wie oben definiert. Die hydrophobe Gruppe (T) ist wie oben definiert, wobei die hydrophobe Gruppe über-B-CONH- an Z gebunden ist.

Der die kationische, anionische und/oder nicht-ionische Gruppe enthaltende Substituent W ist wie oben definiert und über -B-CONH- an Z gebunden. Bevorzugt ist der die kationische Gruppe enthaltende Substituent W -L-NR⁵R⁶H⁺ oder -L-NR⁵R⁶R⁷⁺, wobei L und R⁵ bis R⁷ wie oben definiert sind.

Bevorzugt ist der die anionische Gruppe enthaltende Substituent W -L-COO- oder - L-SO₃⁻, wobei L wie oben definiert sind.

Bevorzugt ist der die nichtionische Gruppe enthaltende Substituent W ein wie oben definiertes Polyalkylenoxid, das über -B-CONH- an Z gebunden ist, wobei B bevorzugt -O- ist

In einer besonderen Ausführungsform umfasst W eine nichtionische Gruppe.

Die Gruppen W und T können jeweils gleich oder unterschiedlich sein.

In einer bevorzugten Ausführungsform macht der Anteil an blockiertem Polyisocyanat n 70-98%, bevorzugt 80-95%, bezogen auf die Summe von n+o+p aus, d.h., 70-98% der ursprünglich vorhandenen freien Isocyanatgruppen im Polyisocyanat sind mit Benzylaminderivat blockiert.

In einer bevorzugten Ausführungsform macht der Anteil an hydrophober Gruppe o 2-20%, bevorzugt 2-10% bezogen auf die Summe von n+o+p aus.

In einer weiteren Ausführungsform macht der Anteil der kationischen, anionischen und/oder nichtionischen Gruppe p 0-10%, bevorzugt 0-7%, stärker bevorzugt 0,1-7% bezogen auf die Summe von n+o+p aus.

Die erfindungsgemäße Zubereitung umfasst ferner mindestens ein oleophobierendes und/oder hydrophobierendes Ausrüstungsmittel. Die in den erfindungsgemäßen Zubereitungen verwendeten Ausrüstungsmittel, die zur Erzielung einer Wasserabweisung notwendig sind, können sowohl fluorhaltig als auch fluorfrei sein. Zur Erzielung einer Oleophobierung ist es jedoch zwingend erforderlich, dass ein fluorhaltiges Ausrüstungsmittel enthalten ist.

In einer bevorzugten Ausführungsform umfasst das oleophobierende und/oder hydrophobierende Ausrüstungsmittel mindestens ein Fluorcarbonpolymer. Bei den Fluorcarbonpolymeren handelt es sich bevorzugt um Homo- oder Copolymere. In einer bevorzugten Ausführungsform enthält das Fluorcarbonpolymer mindestens eine Wiederholungseinheit der Formel (III) 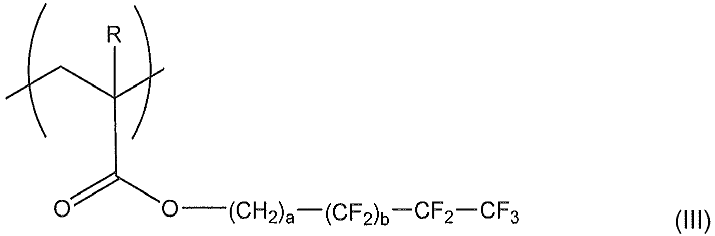 wobei
R H oder CH₃ ist,
a eine ganze Zahl von 0-6, bevorzugt 2-4, stärker bevorzugt 2 ist und
b eine ganze Zahl von 0-4, stärker bevorzugt 4 ist.

Als Comonomere zu den perfluorierten (Meth)Acrylaten gemäß Formel (III) können lineare, verzweigte und/oder zyklische C₂₋₂₂-Alkyl(meth)acrylate wie z.B. Isobornyl(meth)acrylat, Cyclohexyl(meth)acrylat, 2-Ethylhexyl(meth)acrylat, Isodecyl(meth)acrylat, Lauryl(meth)acrylat, Myristyl(meth)acrylat, Cetyl(meth)acrylat, Stearyl(meth)acrylat, Behenyl(meth)acrylat, Vinylchlorid, Vinylidenchlorid und/oder Styrol, insbesondere Cetyl(meth)acrylat, Stearyl(meth)acrylat, Behenyl(meth)acrylat, Vinylchlorid und/oder Vinylidenchlorid verwendet werden.

Des weiteren können Comonomere eingesetzt werden, die eine vernetzbare Gruppe enthalten. Eine vernetzbare Gruppe ist dabei eine funktionelle Gruppe, die mit dem auszurüstenden Flächengebilde und/oder einem externen Vernetzer (multifunktionelle Verbindung) reagieren kann. Beispielhafte Comonomere mit vernetzbarer Gruppe sind 2-Hydroxyethyl(meth)acrylat, 3-Hydroxypropyl(meth)acrylat, N-hydroxymethyl(meth)acrylamid, 3-Chloro-2-hydroxypropyl(meth)acrylat, N-Isobutoxymethylacrylamid, Polyalkylenglykolmono(meth)acrylat. N-Butoxymethylacrylamid und Glycidyl(meth)acrylat, bevorzugt 2-Hydroxyethyl-(meth)acrylat, N-Hydroxymethyl(meth)acrylamid, 3-Chlor-2-hydroxypropyl(meth)-acrylat, Gycidyl(meth)acrylat, insbesondere bevorzugt 2-Hydroxyethyl(meth)acrylat, N-Hydroxymethyl(meth)acrylamid und/oder Glycidyl(meth)acrylat.

Die Copolymere zur oleophobierenden und/oder hydrophobierenden Ausrüstung werden üblicherweise durch radikalische Polymerisation unter Verwendung von Radikalinitiatoren, die dem Fachmann bekannt sind, hergestellt. Übliche Radikalinitiatoren sind Azoverbindungen, wie z.B. Azobisisobutyronitril, Azobisvaleronitril, 2,2'-Azobis(2-amidinopropan)dihydrochlorid, und 2,2'-Azobis[2-(2-imidazolin-2-yl)propan)dihydrochlorid, Hydroperoxide wie z.B. Cumolhydroperoxid und tert-Butylhydroperoxid, Dialkylperoxid wie Di-tert-butylperoxid und Dicumolperoxid, Peroxyester wie z.B. tert-Butylperbenzoat, Diacylperoxide wie z.B. Benzoylperoxid und Lauroylperoxid, anorganische Peroxide wie z.B. Ammoniumpersulfat und Kaliumpersulfat oder Kombination davon mit organischen und anorganischen Metallverbindungen.

Die Polymersation kann in Lösung oder über Emulsionspolymerisation erfolgen. Bevorzugt wird das Copolymer über eine Emulsionspolymerisation hergestellt. Dabei werden die Monomere, Wasser, Tensid, Radikalinitiator und ggf. weitere Lösungsmittel, wie z.B. Alkohole (z.B. Ethanol, Isopropanol, Butyldiglykol, Propylenglykol, Dipropylenglykol, Tripropylenglykol), Ether (z.B. Dipropylenmonomethylether, Tripropylenglykolmonomethylether, Dipropylenglykolmonobutylether, Dipropylenglykoldimethylether) und Ester (wie z.B. Propylenglykolmonomethyletheracetat), zu einer Präemulsion vermischt. Die Polymerisation wird dann üblicherweise bei einer Temperatur von 40-90°C unter Rühren initiiert. Um die Kettenlänge der Copolymere zu kontrollieren, können ferner Kettenregler wie z.B. Alkylthiole eingesetzt werden. Der Feststoffgehalt der Polymerdispersion liegt nach vollendeter Polymerisation zwischen 15-40 Gewichtsprozent bezogen auf die Gesamtmasse. Als Tenside kommen nichtionische, anionische und/oder kationische Tenside oder Mischungen davon zum Einsatz.

Bevorzugte nichtionische Tenside sind z.B. Alkoxylierungsprodukte von Fettsäuren, Fettsäureestern, Fettsäureamiden, aliphatischen Alkoholen, Zuckerderivaten. Bevorzugt werden Ethoxylierungsprodukte linearer oder verzweigter aliphatischer Alkohole mit 6 bis 22 Kohlenstoffatomen verwendet, die allein oder in Mischung zur Anwendung gelangen. Als amphoteres Tensid kann Cocamidopropylbetain eingesetzt werden.

Als bevorzugte kationische Tenside seien beispielhaft quaternäre Ammoniumsalze, wie z.B. Di-(C₁₀-C₂₄)-alkyldimethylammoniumchlorid, (C₁₀-C₂₄)-Alkyldimethylethylammoniumchlorid oder -bromid, (C₁₀-C₂₄)-Alkyltrimethylammoniumchlorid oder -bromid, (C₁₀-C₂₄)-Alkyldimethylbenzylammoniumchlorid, Alkylmethylpolyoxyethylenammoniumchlorid, -bromid oder -monoalkylsulfat, Salze von primären, sekundären und tertiären Fettaminen mit 8 bis 24 C-Atomen mit organischen oder anorganischen Säuren, Salze von ethoxylierten primären und sekundären Fettaminen mit 8 bis 24 C-Atomen mit organischen oder anorganischen Säuren, Imidazolinium-Derivate oder Esterquats genannt. Bevorzugt werden Di-(C₁₀-C₂₄)-Alkyldimethylammoniumchlorid, (C₁₀-C₂₄)-Alkyltrimethylammoniumchlorid oder -bromid, Salze von primären, sekundären und tertiären Fettaminen mit 8 bis 24 C-Atomen mit organischen oder anorganischen Säuren und Esterquats eingesetzt.

Beispiele für anionische Emulgatoren sind Fettalkoholsulfate wie z.B. Natriumlaurylsulfat, Alkylsulfonate wie z.B. Natriumlaurylsulfonat, Aklybenzolsulfonate, wie z.B. Natriumdodecylbenzolsulfonat und Fettsäuresalze wie z.B. Natriumstearat.

Ferner können die hydrophobierenden Ausrüstungsmittel auch fluorfreie Ausrüstungsmittel umfassen. Fluorfreie Ausrüstungsmittel sind insbesondere natürliche und synthetische Wachse, wie z.B. C₈₋₃₀-Polyolephine, Poly(meth)acrylate, wie z.B. Poly(meth)-C₁₋₂₂-Acrylate, Polyurethane, Fettsäure-modifizierte Melamine, Organopolysiloxane, Metallsalze von Fettsäuren, Fettsäurekondensationsprodukte oder Kombinationen davon.

Es wurde gefunden, dass die hydrophobierenden bzw. oleophobierenden Ausrüstungsmittel ohne das blockierte Polyisocyanat keine ausreichende Waschpermanenz aufweisen. Das heißt, das Eigenschaftsprofil der mit den hydrophobierenden und/oder oleophobierenden Ausrüstunsgmittel behandelten Materialien verschlechtert sich mit jedem Waschvorgang signifikant. Die Kombination aus blockierten Polyisocyanat(en) und Ausrüstungsmittel(n) führt somit nicht nur zu verbesserten Anfangseffekten, sondern auch zu einer deutlich gesteigerten Waschpermanenz.

Die erfindungsgemäßen Zubereitungen können ferner mindestens ein organisches Lösungsmittel, Wasser oder Mischungen davon enthalten. Geeignete organische Lösungsmittel sind insbesondere wasserlösliche Lösungsmittel, insbesondere Glykole (z.B. Butyldiglykol, Propylenglykol, Dipropylenglykol, Tripropylenglykol), Ether (z.B. Dipropylenmonomethylether, Tripropylenglykolmonomethylether, Dipropylenglykolmonobutylether, Dipropylenglykoldimethylether) und/oder Ester (z.B. Propylenglykolmonomethyletheracetat).

Die erfindungsgemäße Zubereitung liegt bevorzugt in Form einer Dispersion, stärker bevorzugt in Form einer Emulsion vor. Der Feststoffgehalt der Dispersion liegt zwischen 20-40 Gewichtsprozent bezogen auf die Gesamtmasse der Zubereitung.

In diesem Fall kann die erfindungsgemäße Zubereitung ferner Tenside oder Tensidmischungen enthalten. Bevorzugt umfassen die Zubereitungen mindestens ein anionisches, kationisches und/oder nichtionisches Tensid. Als Tenside können insbesondere solche verwendet werden, die auch bei der Copolymerisation der oleophobierenden/hydrophobierenden Ausrüstungsmittel eingesetzt werden (siehe oben). Die Menge an zusätzlichem Tensid in der Zubereitung beträgt bevorzugt 0 bis 20, stärker bevorzugt 0,1-15 Gewichtsprozent bezogen auf den Feststoffgehalt der Zubereitung.

Die erfindungsgemäße Zubereitung enthält das blockierte Polyisocyanat bevorzugt in einem Anteil von 10-80%, bevorzugt 20-70%, stärker bevorzugt 30-60%, bezogen auf den Feststoffgehalt. Das mindestens eine oleophobierende und/oder hydrophobierende Ausrüstungsmittel kann in der erfindungsgemäßen Zubereitung in einem Anteil von 15%-90%, bevorzugt 30%-80% und stärker bevorzugt 40-70%, bezogen auf den Feststoffgehalt enthalten sein.

In einer Ausführungsform umfasst die erfindungsgemäße Zubereitung (z.B. eine wässrige Emulsion) mindestens ein blockiertes Polyisocyanat gemäß Formel (I) (z.B. 15-40 Gewichtsprozent, bevorzugt 20-40 Gewichtsprozent, besonders bevorzugt 20-30 Gewichtsprozent bezogen auf den Feststoffgehalt), mindestens ein fluorhaltiges, insbesondere Fluorcarbonpolymer-haltiges, oleophobierendes und/oder hydrophobierendes Ausrüstungsmittel (z.B. 15-40 Gewichtsprozent, bevorzugt 20-40 Gewichtsprozent, besonders bevorzugt 20-30 Gewichtsprozent bezogen auf den Feststoffgehalt) und mindestens ein fluorfreies hydrophobierendes Ausrüstungsmittel (z.B. 20-70 Gewichtsprozent, bevorzugt 20-60 Gewichtsprozent, besonders bevorzugt 40-60 Gewichtsprozent bezogen auf den Feststoffgehalt).

In einer anderen Ausführungsform umfasst die erfindungsgemäße Zubereitung (z.B. eine wässrige Emulsion) mindestens ein blockiertes Polyisocyanat gemäß Formel (I) (z.B. 10-80 Gewichtsprozent, bevorzugt 20-70 Gewichtsprozent, besonders bevorzugt 30-60 Gewichtsprozent bezogen auf den Feststoffgehalt) und mindestens ein fluorhaltiges, insbesondere Fluorcarbonpolymer-haltiges, oleophobierendes und/oder hydrophobierendes Ausrüstungsmittel (z.B. 20-90 Gewichtsprozent, bevorzugt 30-80 Gewichtsprozent, besonders bevorzugt 40-70 Gewichtsprozent bezogen auf den Feststoffgehalt).

In einer anderen Ausführungsform umfasst die erfindungsgemäße Zubereitung (z.B. eine wässrige Emulsion) mindestens ein blockiertes Polyisocyanat gemäß Formel (I) (z.B. 10-80 Gewichtsprozent, bevorzugt 20-70 Gewichtsprozent, besonders bevorzugt 30-60 Gewichtsprozent bezogen auf den Feststoffgehalt) und mindestens ein fluorfreies, insbesondere Fluorcarbonpolymer-freies, hydrophobierendes Ausrüstungsmittel (z.B. 20-90 Gewichtsprozent, bevorzugt 30-80 Gewichtsprozent, besonders bevorzugt 40-70 Gewichtsprozent bezogen auf den Feststoffgehalt). Es sei darauf hingewiesen, dass für die Erzielung von Öl-abweisenden Effekten die Anwesenheit eines fluorhaltigen oleophobierenden und/oder hydrophobierenden Ausrüstungsmittels zwingend erforderlich ist und daher diese Mischung auf dem Textil lediglich einen wasserabweisenden Effekt erzeugt.

Ein weiterer Gegenstand der vorliegenden Erfindung ist ein blockiertes Polyisocyanat gemäß Formel (II) 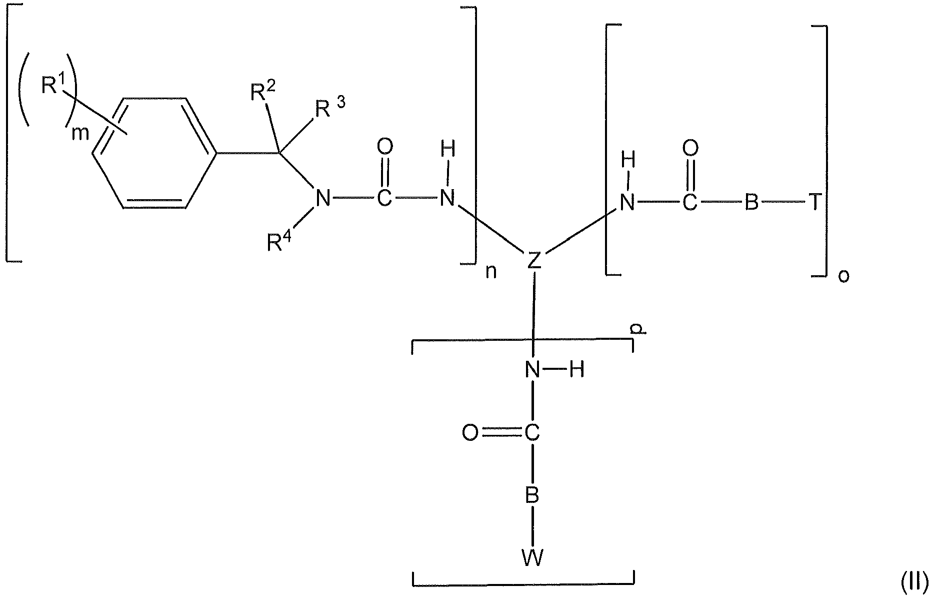 wobei Z, W, T, B, R¹-R⁴, m, n, o und p wie oben definiert sind.

Ein anderer Gegenstand der vorliegenden Erfindung ist ein Verfahren zur Herstellung eines blockierten Polyisocyanats der Formel (II) umfassend die Schritte
(i) Bereitstellen eines Polyisocyanats
(ii) Umsetzen des Polyisocyanats mit Benzylamin der Formel (IV) 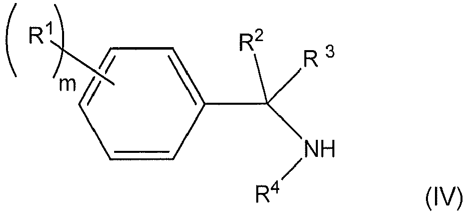
einer hydrophoben und ggf. einer anionischen, kationischen und/oder nichtionischen Gruppe enthaltenden Verbindung, die ein Isocyanat-reaktives Wasserstoff-Atom enthält.

Bevorzugt erfolgt das erfindungsgemäße Verfahren in einem Eintopfverfahren oder durch Zugabe der Reaktionspartner nacheinander. Bevorzugt wird das Polyisocyanat vorgelegt und nacheinander das Benzylamin der Formel (IV) und ggf. Amin(e) und/oder Alkohol(e) der Verbindung T und/oder W zugegeben.

In einer Ausführungsform kann die Reaktion in Gegenwart eines nicht-protischen Lösungsmittels durchgeführt werden. Besonders bevorzugt sind Lösungsmittel, die bei der Emulgierung des blockierten Polyisocyanats hilfreich sind, wie beispielsweise N-Ethylpyrrolidon oder Dipropylenglykoldimethylether. Andere geeignete Lösungsmittel sind beispielsweise Ethylmethylketon, Methylpropylketon, Ethylacetat, n-Propylacetat, i-Propylacetat, n-Butylacetat oder i-Butylacetat. Zur Beschleunigung der Reaktion können ferner Katalysatoren, insbesondere tertiäre Amine, wie z.B. Diazabicyclooktan oder Metallcarboxylate, wie z.B. Dibutylzinndilaurat oder Bismuttris(2-Ethyl-hexanoat) eingesetzt werden. Sofern vorhanden, kann das Lösungsmittel in einem weiteren Schritt abdestilliert werden.

Ein weiterer Gegenstand der vorliegenden Erfindung ist ein Verfahren zur Herstellung der erfindungsgemäßen Zubereitung. Hierzu werden das mindestens eine blockierte Polyisocyanat und das mindestens eine oleophobierende und/oder hydrophierende Ausrüstungsmittel und ggf. mindestens ein organisches Lösungsmittel, Wasser oder Mischungen davon und ggf mindestens ein Tensid vermischt. Die Mischung erfolgt durch geeignete mechanische Hilfsmittel, wie z.B. Rührer, Ultraturrax, Dissolverscheibe, Hochdruck-, Ultraschallhomogenisator oder andere dem Fachmann bekannte Dispergierverfahren. In einer bevorzugten Ausführungsform werden Emulsionen der erfindungsgemäßen blockierten Polyisocyanate hergestellt, indem zunächst eine grobteilige Voremulsion gebildet wird, deren Tröpfchen anschließend unter Zuhilfenahme von Hochdruckhomogenisatoren auf eine kleine Teilchengröße verkleinert werden. Nach der Dispergierung werden ggf. vorhandene Lösungsmittelreste destillativ entfernt.

Ein weiterer Aspekt der vorliegenden Erfindung ist ein Kit umfassend
(i) mindestens ein blockiertes Polyisocyanat der Formel (I) und/oder (II), wie oben definiert, und
(ii) mindestens ein oleophobierendes und/oder hydrophobierendes Ausrüstungsmittel.

Ein weiterer Aspekt der vorliegenden Erfindung ist die Verwendung der erfindungsgemäßen Zubereitung oder der erfindungsgemäßen Verbindung (II) oder des erfindungsgemäßen Kits zur olephoben und/oder hydrophoben Ausrüstung von Flächengebilden, insbesondere von Textilien. Textilien im Sinne der Erfindung sind insbesondere Gewebe, Gewirke und verfestigte Faservliese (Non-Wovens) aus nativen Fasern, wie z.B. Wolle oder Baumwolle oder Synthetikfasern, wie z.B. PES, PA und Regeneratfasern oder Mischungen davon.

Ein weiterer Gegenstand der vorliegenden Erfindung ist ein Verfahren zur Ausrüstung von Flächengebilden, insbesondere von Textilien, umfassend die Schritte
(a) Bereitstellen der erfindungsgemäßen Zubereitung, oder Mischen der Kitkomponenten (i) und (ii),
(b) Aufbringen der Zubereitung oder der in Schritt (a) erhaltenen Mischung auf ein Flächengebilde; und
(c) thermisches Behandeln des Flächengebildes.

Der Auftrag der Zubereitung oder Mischung auf das Flächengebilde im Schritt (b) erfolgt im Allgemeinen mit Auflagen von 0,1-3 Gewichtsprozent, vorzugsweise 0,1 bis 2,5 Gewichtsprozent, besonders bevorzugt 0,1 bis 2,0 Gewichtsprozent Feststoffanteil der Zubereitung bzw. Mischung bezogen auf das Gewicht des zu behandelnden Flächengebildes. Üblicherweise wird hierzu eine Flotte in der gewünschten Konzentration hergestellt. Die Konzentration der Anwendungsflotte wird dabei so gewählt, dass sich jeweils der gewünschte Auftrag ergibt. Der Anwendungsflotte können weitere Präparationsmittel zugesetzt werden. Als zusätzliche Präparationsmittel kommen beispielsweise Chemikalien zur Knitterfreiausrüstung (z.B. Methylolverbindungen des Dihydroxyethylenharnstoffs oder Methylolmelaminether mit unterschiedlichen Methylolierungsgraden), Flammschutzmittel oder Weichgriffmittel in Betracht.

Die Zubereitung oder Mischung wird auf herkömmliche dem Fachmann bekannte Verfahren, z.B. durch Zwangsapplikation, Ausziehverfahren, Sprühen, Tränken, Pflatschen, Drucken, Beschichten oder Foulardieren auf das Flächengebilde aufgetragen

In einer bevorzugten Ausführungsform wird die erfindungsgemäße Zubereitung oder Mischung durch Tränken des Flächengebildes in der Anwendungsflotte und anschließendes Abquetschen auf dem Foulard aufgebracht.

Die Trocknung und thermische Behandlung des in Schritt (b) erhaltenen Flächengebildes erfolgt im Schritt (c) bevorzugt bei Temperaturen zwischen 130-170°C. Die Behandlung erfolgt bevorzugt im Spannrahmentrockner. Bei den angegebenen Temperaturen spaltet sich die Benzylaminderivat-Schutzgruppe ab und verflüchtigt sich. Die entstandene reaktive Isocyanatgruppe reagiert mit isocyanatreaktiven Wasserstoffatomen des Substrats und/oder der weiteren Komponenten, sodass die Komponenten und/oder das Substrat zumindest teilweise miteinander vernetzen. Die thermische Behandlung des Flächengebildes erfolgt bevorzugt in 0,5 bis 10 Minuten, insbesondere bevorzugt in 1-5 Minuten. Die Dauer der thermischen Behandlung ist dabei auch abhängig von den angewendeten Temperaturen.

Ein weiterer Gegenstand der vorliegenden Erfindung ist ein derart oleophob und/oder hydrophob ausgerüstetes Flächengebilde, insbesondere Textil, das erhältlich ist durch
(a) Aufbringen einer erfindungsgemäßen Zubereitung oder einer Mischung der Kitkomponenten (i) und (ii) auf ein Flächengebilde, insbesondere Textil und
(b) thermisches Behandeln des Flächengebildes.

Es wurde gefunden, dass die erfindungsgemäßen Zubereitungen den erfindungsgemäßen Flächengebilden eine ausgezeichnete Anfangshydrophobie/ -oleophobie und sehr gute Waschpermanenz verleihen. Ferner liegen die Deblockierungstemperatur der blockierten Polyisocyanate und der Siedepunkt des Blockierungsmittels (Benzylaminderivate) vergleichsweise niedrig, so dass sichergestellt ist, dass keine Restmengen an Blockierungsmittel auf dem Textil verbleiben. Darüber hinaus sei angemerkt, dass die als Schutzgruppen verwendeten Benzylamin-Derivate außerdem toxikologisch unbedenklich sind.

### Beispiele

Die nachfolgenden Beispiele erläutern die Erfindung. In den Beispielen 1 bis 4 wird die Herstellung der erfindungsgemäßen blockierten Polyisocyanate beschrieben (Dispersionen 1-4). Aus den Dispersionen wurden Zubereitungen mit Oleo- und/oder Hydrophobierungsmittel formuliert. Tabelle 1 zeigt nicht erfindungsgemäße Zubereitungen 1-8, Tabelle 2 zeigt die erfindungsgemäßen Zubereitungen 9-20. Die Applikation der Zubereitungen auf textilen Flächengebilden erfolgte auf einem Laborfoulard des Typs LFV 350/2 "RFA" (Fa. Benz, Schweiz) mit nachfolgender Trocknung und Heißbehandlung auf einem Laborspannrahmen des Typs TKF 15/M 350 (Fa. Benz, Schweiz). Die Bestimmung der Flottenaufnahme erfolgt durch Auswiegen der appretierten Testmuster vor und nach der Applikation.

Die Prüfung der hydrophoben Effekte erfolgt nicht unmittelbar nach der Applikation, sondern erst nach einer Konditionierung der Substrate im Normklima während 24 Stunden, um Einflüsse auf diese Eigenschaften durch Übertrocknung zu nivellieren. Auflagemengen sowie die Bedingungen der Heißbehandlung sind gemeinsam mit den Ergebnissen der Hydrophobierungsmessung in den Tabellen 3a und 3b aufgeführt.

Die Wasserabweisung wurde auf den textilen Flächengebilden sowohl mittels Spraytest gemäß AATCC Standard Test Method 22 als auch mittels des wesentlich stärker differenzierenden "Bundesmanntests" gemäß DIN 53 888 getestet. Die Prüfung gemäß AATCC Standard Test Method 22 erfolgt durch Aufsprühen von destilliertem Wasser unter kontrollierten Bedingungen auf das zu prüfende textile Substrat und anschließendem visuellen Vergleich des Benetzungsmusters zu Bildern eines in der Testmethode aufgeführten Beurteilungsstandards. Die angegebenen Zahlenwerte beziehen sich dabei auf das Erscheinungsbild der Oberfläche nach dem Aufsprühen des Wassers und haben folgende Bedeutung:

| | |
|---|---|
| 100= | kein Anhaften von Wassertropfen oder keine Benetzung der oberen Oberfläche |
| 90= | vereinzeltes Anhaften von Wassertropfen oder Benetzung der oberen Oberfläche |
| 80= | Benetzung der oberen Oberfläche an den Auftreffpunkten des Wassers |
| 70 = | Teilweise Benetzung der ganzen oberen Oberfläche |
| 50= | Vollständige Benetzung der ganzen oberen Oberfläche |
| 0= | Vollständige Benetzung der ganzen oberen und unteren Oberfläche (Durchnetzung). |

Beim wesentlich stärker differenzierenden "Bundesmanntest" gemäß DIN 53 888 wird das zu prüfende textile Substrat der Einwirkung eines definierten künstlichen Regens ausgesetzt und die nach einer bestimmtem Dauer aufgenommene Wassermenge in Prozent bestimmt. In den Tabellen 3a und 3b ist die aufgenommene Wassermenge als "Wasseraufnahme" gekennzeichnet. Weiterhin wird der in Tabellen 3a und 3b als "Abperleffekt" gekennzeichnete Wasser-Abperleffekt zur Beurteilung herangezogen. Dieser wird durch visuellen Vergleich der beregneten Testmuster mit in der DIN-Vorschrift aufgeführten Bildern nach 5 Noten beurteilt, die wie folgt definiert sind:

| | |
|---|---|
| Note 5= | kleine Tropfen perlen lebhaft ab |
| Note 4= | Ausbildung größerer Tropfen |
| Note 3= | Tropfen bleiben stellenweise auf der Messprobe hängen |
| Note 2= | Messprobe teilweise angenetzt |
| Note 1= | Messprobe auf der gesamten Fläche an- bzw. durchgenetzt |

Um die Beständigkeit der appretierten Flächengebilde gegenüber Waschprozessen zu prüfen, wurden die Testmuster gemäß EN ISO 6330:2000 bei 60°C gewaschen und bei 70 °C im Wäschetrockner getrocknet.

Zur Bestimmung der Vergilbung wurden die ausgerüsteten Baumwollgewebe (s. Tabelle 3a) auf dem Weißgradmeßgerät "texflash 2000" der Firma "datacolor international" (Schweiz) nach Ganz-Griesser gemessen.

Folgende kommerziell erhältlichen Produkte wurden eingesetzt:
**Ruco-Guard TIE**: Feststoffgehalt: 25 %, wässrige Emulsion eines Butanonoxim-blockierten aromatischen Polyisocyanats; Rudolf GmbH
**Cassurit FF fl.**: Feststoffgehalt: 40 %, wässrige Emulsion eines 3,5-Dimethylpyrazol-blockierten aliphatischen Polyisocyanats; Clariant
**Ruco-Guard AFB6 conc.**: Feststoffgehalt: 27 %, wässrige Emulsion eines Oleo- und Hydrophobierungsmittels auf Basis eines 2-(Perfluorhexyl)ethylmethacrylat enthaltenden Fluorcarbonpolymers, Rudolf GmbH
**Ruco-Dry ECO**: Feststoffgehalt: 20 %, wässrige Emulsion eines Fluorcarbonpolymer-freien Hydrophobierungsmittels; Rudolf GmbH
**Aduxol MPEG 750**: Polyethylenglykolmonomethylether M = ca. 750 g/mol; Schärer und Schläfer AG
**Aduxol MPEG 550**: Polyethylenglykolmonomethylether M = ca. 750 g/mol; Schärer und Schläfer AG
**Desmodur N 3300**: Aliphatisches Polyisocyanat (Hexamethylendiisocyanat-Trimerisat); Bayer Material Science
**Desmodur N 3200**: Aliphatisches Polyisocyanat (Hexamethylendiisocyanat-Biuret); Bayer Material Science
**Tolonate IDT 70 B**: Aliphatisches Polyisocyanat (Isophorondiisocyanat-Trimerisat); Bayer Material Science
**Lutensol TO 129**: Isotridecanol 12 EO ; BASF
**Arquad T 50**: Talgfetttrimethylammoniumchlorid,

### Erfindungsgemäßes Beispiel 1: Wässrige Dispersion eines tert.-Butylbenzylamin blockierten Polyisocyanats; DISPERSION 1

In einem Dreihalskolben, ausgestattet mit Rückflussskühler, regelbarem Rührer und Innenthermometer werden 65,0 g (337,2 mmol NCO) Desmodur N3300 unter Schutzgas in 60,0 g Dipropylenglykoldimethylether gelöst. Es werden nun 0,24 g Diazabicyclooctan und 4,85 g (18,0 mmol) Stearylalkohol hinzugeben. Das Reaktionsgemisch wird 30 min bei 55 °C gerührt. Anschließend gibt man 10,0 g (13,3 mmol) Aduxol MPEG 750 und 0,14 g (7,8 mmol) Wasser dem Reaktionsgemisch hinzu. Nach 1 h bei 55 °C werden die verbliebenen NCO-Gruppen mit 47,0 g (287,8 mol) tert.-Butylbenzylamin zur Reaktion gebracht. Über IR-Spektroskopie wird kontrolliert, ob die Umsetzung vollständig ist.

Nun gibt man 6,96 g Lutensol TO 129 und 1,41 g 60 %ige Essigsäure hinzu. Unter kräftigem Rühren werden bei 50°C in kleinen Portionen 330 g dest. Wasser hinzugefügt, wobei eine feinteilige Emulsion mit einem Feststoffgehalt von ca. 25 % entsteht.

### Erfindungsgemäßes Beispiel 2: Wässrige Dispersion eines tert.-Butylbenzylamin blockierten Polyisocyanats; DISPERSION 2

In einem Dreihalskolben, ausgestattet mit Rückflussskühler, regelbarem Rührer und Innenthermometer werden 71,0 g (207,9 mmol NCO) Tolonate IDT 70 B unter Schutzgas in 60 g Isopropylacetat gelöst. Es werden nun 0,1 g Diazabicyclooctan, 4,0 g (12,3 mmol) Behenylalkohol und 29,50 g (180,6 mmol) tert.-Butylbenzylamin hinzugeben. Das Reaktionsgemisch wird 30 min bei 75 °C gerührt. Anschließend gibt man 1,0 g (8,5 mmol), 1,6-Hexandiol dem Reaktionsgemisch hinzu. Nach 1 h bei 75 °C wird über IR-Spektroskopie kontrolliert, ob die Umsetzung vollständig erfolgt ist. Ist dies der Fall wird auf 65°C abgekühlt.

In einem separaten Becherglas werden 5,0 g Lutensol TO 12 und 3,0 g Arquad T 50 bei 65°C in 270 g dest. Wasser gelöst.

Unter kräftigem Rühren mit einem Ultra-Turrax wird die warme Reaktionsmischung langsam zu der wässrigen Emulgatorlösung hinzugegeben, wobei eine grobteilige Voremulsion entsteht. Diese wird nun bei 65°C auf der Hochdruckhomogenisiermaschine bei 300 - 500 bar homogenisiert. Anschließend wird das Lösemittel auf dem Rotationsverdampfer im Vakuum destillativ entfernt. Gegebenenfalls wird der pH-Wert der erhaltenen Emulsion mit Essigsäure (60%) auf 5 - 7 eingestellt, die erhaltene weiße Emulsion über ein Filter mit 20 Mikrometer filtriert und mit Wasser auf einen Feststoffgehalt von ca. 25 % eingestellt.

### Erfindungsgemäßes Beispiel 3: Wässrige Dispersion eines tert.-Butylbenzylamin blockierten Polyisocyanats; DISPERSION 3

In einem Dreihalskolben, ausgestattet mit Rückflussskühler, regelbarem Rührer und Innenthermometer werden 45,0 g (246,3 mmol NCO) Desmodur N 3200 unter Schutzgas in 83 g Isopropylacetat gelöst. Es werden nun 0,1 g Diazabicyclooctan, 3,5 g (18,8 mmol) Laurylalkohol und 34,50 g (211,3 mmol) tert.-Butylbenzylamin hinzugeben. Das Reaktionsgemisch wird 30 min bei 75°C gerührt. Anschließend gibt man 1,00 g (8,5 mmol), 1,6-Hexandiol dem Reaktionsgemisch hinzu. Nach 1 h bei 75°C wird über IR-Spektroskopie kontrolliert, ob die Umsetzung vollständig erfolgt ist. Ist dies der Fall wird auf 65°C abgekühlt.

In einem separaten Becherglas werden 3,0 g Lutensol TO 129 und 5,0 g Arquad T 50 bei 65°C in 400 g dest. Wasser gelöst.

Unter kräftigem Rühren mit einem Ultra-Turrax wird die warme Reaktionsmischung langsam zu der wässrigen Emulgatorlösung hinzugegeben, wobei eine grobteilige Voremulsion entsteht. Diese wird nun bei 65°C auf der Hochdruckhomogenisiermaschine bei 300 - 500 bar homogenisiert. Anschließend wird das Lösemittel auf dem Rotationsverdampfer im Vakuum destillativ entfernt. Gegebenenfalls wird der pH-Wert der erhaltenen Emulsion mit Essigsäure 60%ig auf 5 - 7 eingestellt, die erhaltene weiße Emulsion über ein Filter mit 20 Mikrometer filtriert und mit Wasser auf einen Feststoffgehalt von ca. 25 % eingestellt.

### Erfindungsgemäßes BEISPIEL 4: Wässrige Dispersion eines tert.-Butylbenzylamin blockierten Polyisocyanats; Dispersion 4

In einem Dreihalskolben, ausgestattet mit Rückflussskühler, regelbarem Rührer und Innenthermometer werden 65,0 g (337,2 mmol NCO) Desmodur N3300 unter Schutzgas in 100,0 g Aceton gelöst. Es werden nun 0,24 g Diazabicyclooctan und 5,9 g (31,7 mmol) Laurylalkohol hinzugeben. Das Reaktionsgemisch wird 30 min bei 55°C gerührt. Anschließend gibt man 7,9 g (14,4 mmol) Aduxol MPEG 550 und 0,14 g (7,8 mmol) Wasser dem Reaktionsgemisch hinzu. Nach 1 h bei 55°C werden die verbliebenen NCO-Gruppen mit 45,0 g (275,6 mol) tert.-Butylbenzylamin zur Reaktion gebracht. Über IR-Spektroskopie wird kontrolliert, ob die Umsetzung vollständig ist. Das Aceton wird abdestilliert, wobei eine viskose Masse übrig bleibt, zu der man 6,96 g Lutensol TO 129 und 1,41 g Essigsäure (60%) hinzugibt. Unter kräftigem Rühren werden nun 290 g dest. Wasser bei 50° C in kleinen Portionen hinzugefügt. Es entsteht eine feinteilige Emulsion mit einem Feststoffgehalt von ca. 25 %.

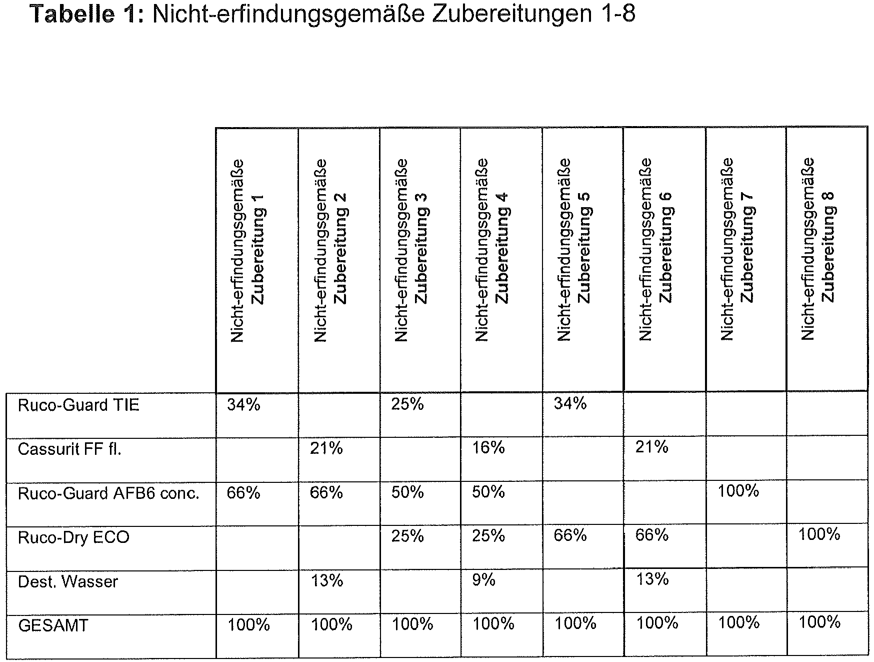

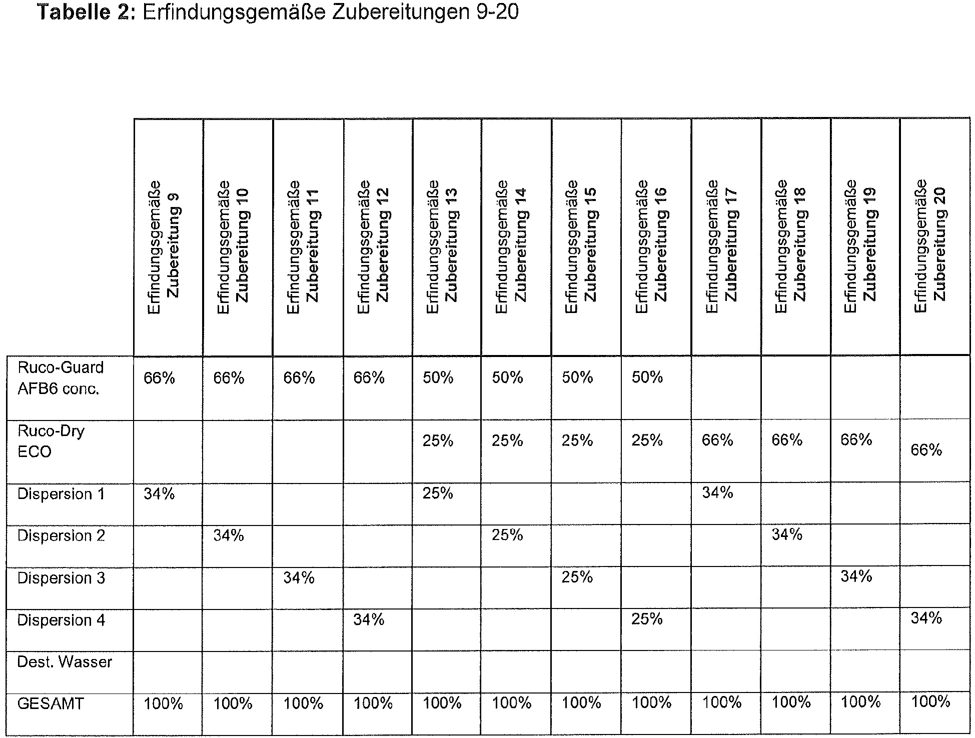

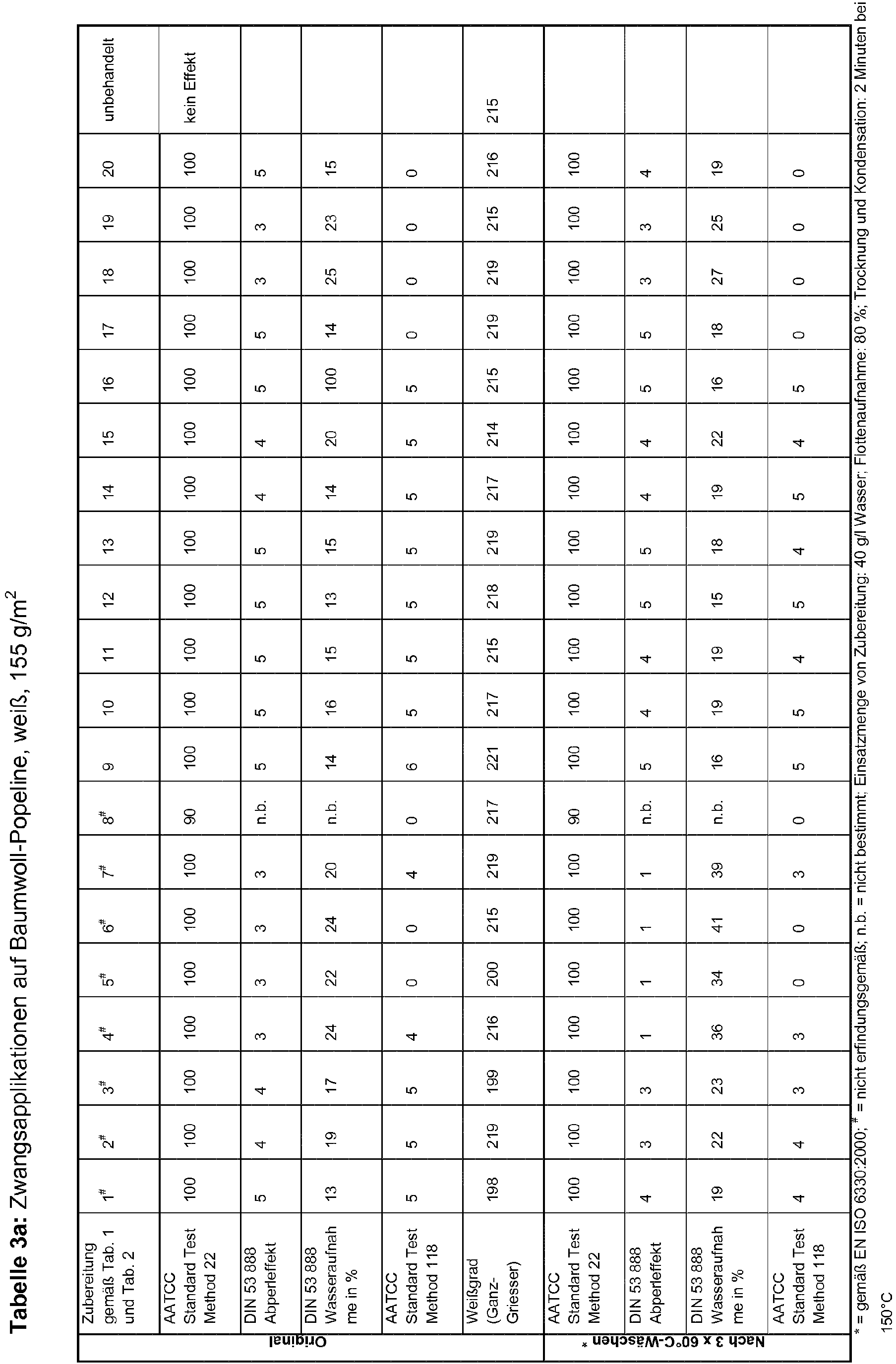

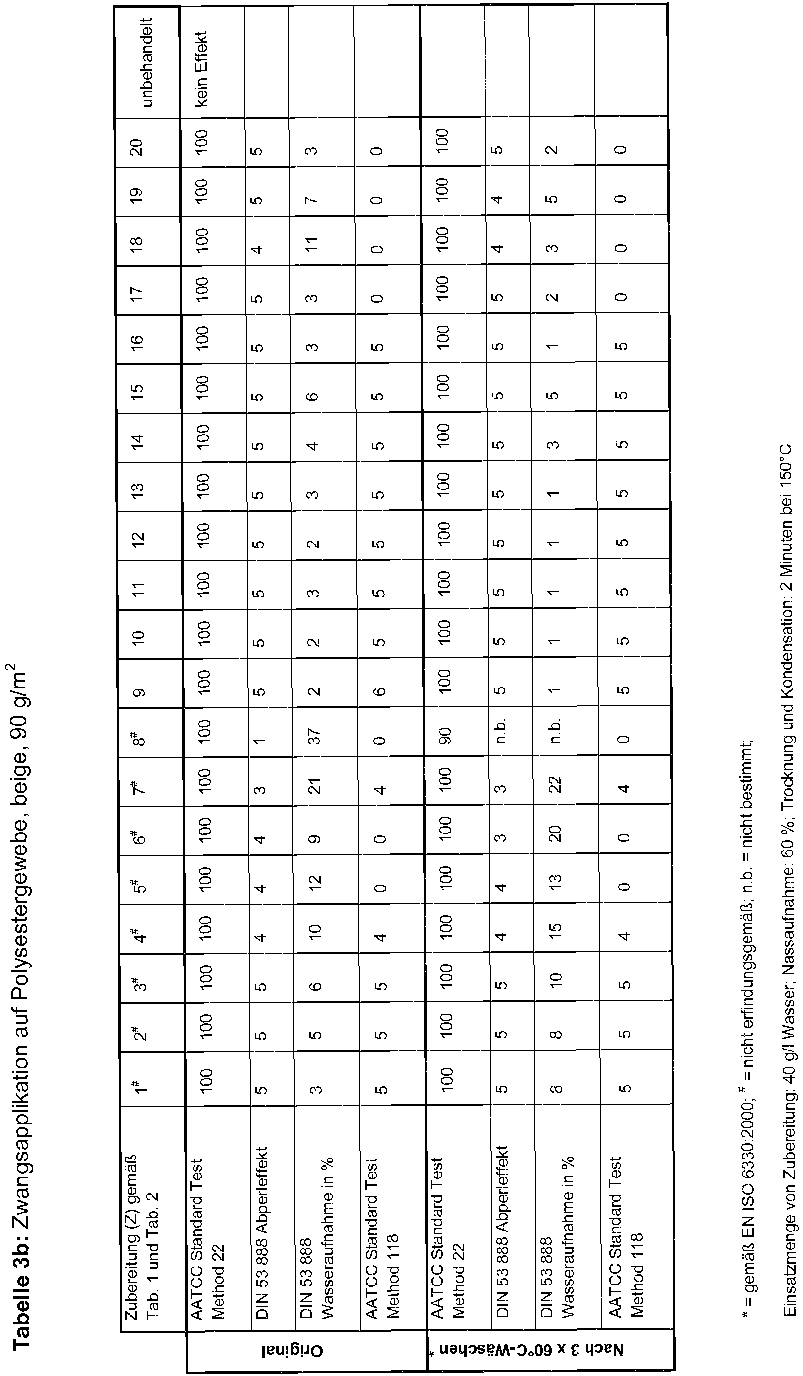

Aus Tabelle 3a/3b wird deutlich, dass Oleo- und/oder Hydrophobierungsmittel ohne den Zusatz eines blockierten Polyisocyanats sowohl auf Baumwolle als auch auf Polyester ein mäßiges Anfangseffektniveau zeigen (s. Tabelle 3a/3b nicht erfindungsgemäße Zubereitung 7 und 8). Durch den Zusatz eines aromatischen Butanonoxim-blockierten Polyisocyanats (RUCO-GUARD TIE) ist die Oleo- und/oder Hydrophobie sowohl auf den Primärmustern als auch auf den gewaschen Mustern gut (nicht erfindungsgemäße Zubereitungen 1, 3 und 5). Schaut man sich jedoch die Weißgrade der ausgerüsteten Baumwollgewebe an, so ist bei diesen Zubereitungen eine deutliche Verschlechterung festzustellen. Somit sind diese Zubereitungen für weiße und helle Waren nicht geeignet. Alternative Dimethylpyrazol-blockierte Polyisocyanate (Cassurit FF fl.) führen in den nicht-erfindungsgemäßen Zubereitungen zu einer Verbesserung der Oleo- und oder Hydrophobie im Primärgewebe, jedoch ist die Waschpermanenz unter den gewählten Trocknungsbedingungen nicht zufriedenstellend.

Die erfindungsgemäßen Zubereitungen 9 - 20 zeigen auf Baumwolle und Polyester ein hervorragendes Anfangseffektniveau. Die mit den erfindungsgemäßen Zubereitungen ausgerüsteten Textilien besitzen auch nach mehreren Wäschen noch sehr gute öl- und/oder wasserabweisende Effekte. Gegenüber den im Stand der Technik verwendeten Butanonoxim- und Dimethylpyrazol-blockierten Polyisocyanaten, werden mit den erfindungsgemäßen Zubereitungen bereits bei moderaten Trocknungstemperaturen sehr gute Ergebnisse erzielt. Ferner sind die erfindungsgemäßen Muster toxikologisch unbedenklich und zeigen keine Vergilbung.

## Patentansprüche

1. Zubereitung enthaltend
(i) mindestens ein blockiertes Polyisocyanat der Formel (I) 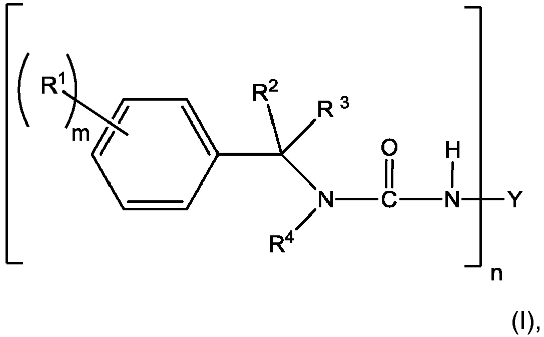 wobei
R¹ unabhängig voneinander Wasserstoff, C₁-C₄-Alkyl oder C₆-C₁₀-Cycloalkyl, bevorzugt Wasserstoff ist,
R² unabhängig voneinander Wasserstoff, C₁-C₄-Alkyl oder C₆-C₁₀-Cycloalkyl, bevorzugt Wasserstoff ist,
R³ unabhängig voneinander Wasserstoff, C₁-C₄-Alkyl oder C₆-C₁₀-Cycloalkyl, bevorzugt Wasserstoff ist,
R⁴ unabhängig voneinander C₁-C₄-Alkyl, C₆-C₁₀-Cycloalkyl oder C₇-C₁₄-Aralkyl, bevorzugt Methyl, Ethyl, Propyl, Isopropyl, n-Butyl, sek-Butyl, tert-Butyl, stärker bevorzugt tert-Butyl ist,
m eine ganze Zahl ausgewählt aus 1, 2, 3, 4 oder 5 ist,
n eine Zahl von 2 bis 10, bevorzugt von 2 bis 8, stärker bevorzugt von 2 bis 6 ist, und
Y ein Rest eines Polyisocyanats ist, der mit einer hydrophoben und gegebenenfalls einer anionischen, kationischen und/oder nicht ionischen Gruppe substituiert ist, wobei die hydrophobe Gruppe ein linearer, zyklischer oder verzweigter, gesättigter oder zumindest teilweise ungestättigter Kohlenwasserstoffrest mit 8-24 Kohlenstoffatomen ist; und
(ii) mindestens ein oleophobierendes und/oder hydrophobierendes Ausrüstungsmittel.

2. Zubereitung nach einem der vorhergehenden Ansprüche, wobei R¹, R² und R³ jeweils H sind und R⁴ tert-Butyl ist.

3. Zubereitung nach Anspruch 1 oder 2, wobei der Polyisocyanat-Rest Y ein aliphatischer, cycloaliphatischer und/oder aromatischer Kohlenwasserstoffrest mit 6-200 Kohlenstoffatomen ist, der ggf. mindestens eine Urethan-, Allophanat-, Harnstoff-, Biuret-, Uretdion-, Isocyanurat-, Carbodiimid-, Iminooxadiazindion und/oder Uretonimin-Gruppe enthält.

4. Zubereitung nach einem der vorhergehenden Ansprüche, wobei die hydrophobe und/oder anionische, kationische und/oder nichtionische Gruppe über eine Urethan- und/oder über eine Harnstoff-Gruppe an den Rest des Polyisocyanats gebunden ist.

5. Zubereitung nach einem der vorhergehenden Ansprüche, wobei die anionische Gruppe ein Carboxylat und/oder ein Sulfonat und die kationische Gruppe ein quaternäres Ammoniumion umfasst.

6. Zubereitung nach einem der vorhergehenden Ansprüche, wobei die nichtionische Gruppe ein Polyalkylenoxid mit einem gewichtsmittleren Molekulargewicht von 200 - 2000 g/mol, bevorzugt 400 - 1000 g/mol umfasst.

7. Zubereitung nach einem der vorhergehenden Ansprüche, wobei das blockierte Polyisocyanat die Formel (II) 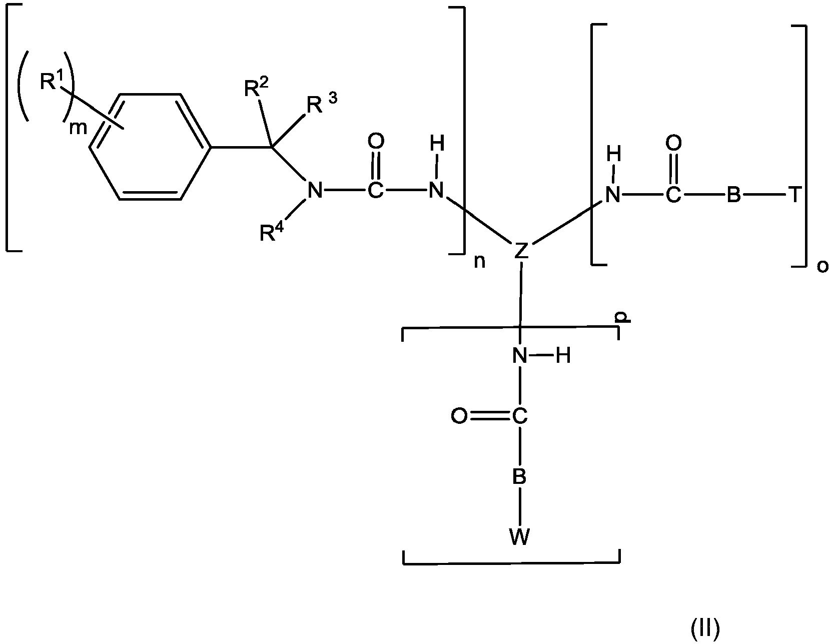 aufweist, wobei
Z ein Rest eines Polyisocyanats ist,
T eine hydrophobe Gruppe ist,
Weine kationische, anionische und/oder nichtionische Gruppe ist,
B -O- und/oder -NH- ist,
o 0,1 bis 4, bevorzugt 0,1-1, ist,
p 0 bis 1, bevorzugt 0,1- 0,5 ist, und
R¹ bis R⁴, m, n, wie oben definiert sind.

8. Zubereitung nach einem der vorhergehenden Ansprüche, wobei das oleophobierende und/oder hydrophobierende Ausrüstungsmittel mindestens ein Fluorcarbonpolymer, das bevorzugt mindestens eine Wiederholungseinheit der Formel (III) umfasst 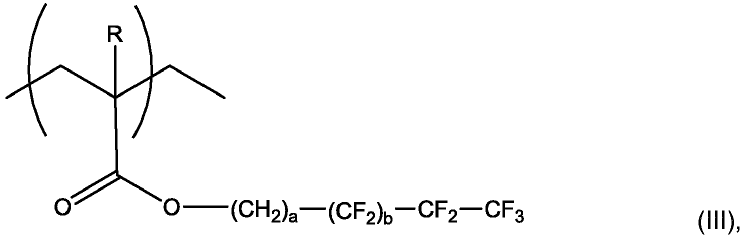 wobei
R H oder CH₃ ist,
a eine ganze Zahl zwischen 0-6, bevorzugt 2 ist, und
b eine ganze Zahl zwischen 0-6, bevorzugt 4 ist.

9. Zubereitung nach einem der vorhergehenden Ansprüche, wobei das hydrophobierende Ausrüstungsmittel fluorfrei ist und bevorzugt Wachs, Poly(meth)acrylat, Polyurethan, Fettsäure-modifiziertes Melamin, Organopolysiloxan, Metallsalz von Fettsäuren, Fettsäurekondensationsprodukte oder Mischungen davon enthält.

10. Zubereitung nach einem der vorhergehenden Ansprüche, wobei die Zubereitung ferner mindestens ein organisches Lösungsmittel, Wasser oder Mischungen davon umfasst.

11. Blockiertes Polyisocyanat der Formel (II) 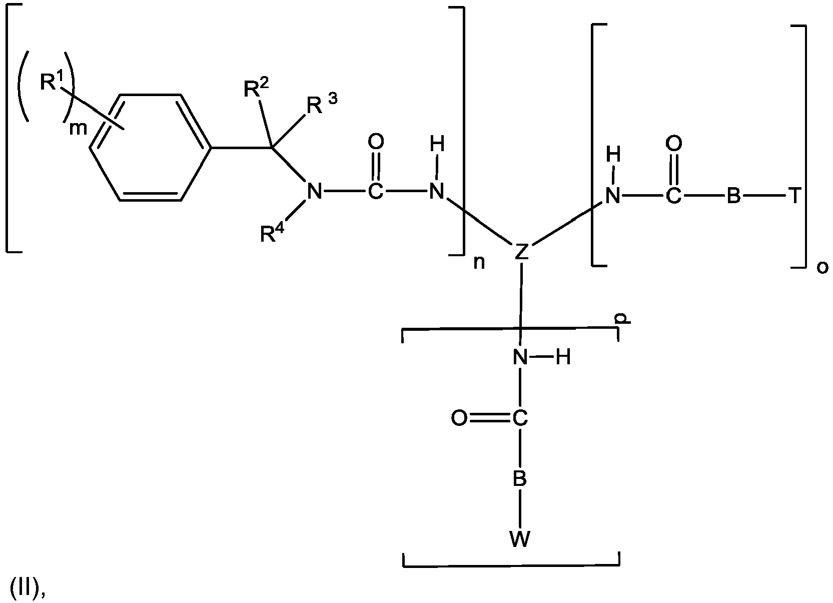
wobei Z, W, T, B, R¹ bis R⁴, m, n, o und p wie oben definiert sind,
wobei die hydrophobe Gruppe T ein linearer, cyclischer oder verzweigter, gesättigter oder zumindest teilweise ungesättigter Kohlenwasserstoffrest mit 8-24 Kohlenstoffatomen ist.

12. Verfahren zur Herstellung eines blockierten Polyisocyanats der Formel (II) umfassend die Schritte:
(i) Bereitstellen eines Polyisocyanats
(ii) Umsetzen des Polyisocyanats mit Benzylamin der Formel (IV) 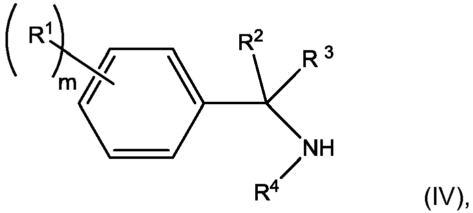 wobei
R¹ unabhängig voneinander Wasserstoff, C₁-C₄-Alkyl oder C₆-C₁₀-Cycloalkyl, bevorzugt Wasserstoff ist,
R² unabhängig voneinander Wasserstoff, C₁-C₄-Alkyl oder C₆-C₁₀-Cycloalkyl, bevorzugt Wasserstoff ist,
R³ unabhängig voneinander Wasserstoff, C₁-C₄-Alkyl oder C₆-C₁₀-Cycloalkyl, bevorzugt Wasserstoff ist,
R⁴ unabhängig voneinander C₁-C₄-Alkyl, C₆-C₁₀-Cycloalkyl oder C₇-C₁₄-Aralkyl, bevorzugt Methyl, Ethyl, Propyl, Isopropyl, n-Butyl, sek-Butyl, tert-Butyl, stärker bevorzugt tert-Butyl ist,
m eine ganze Zahl ausgewählt aus 1, 2, 3, 4 oder 5 ist,
einer hydrophoben und ggf. einer anionischen, kationischen und/oder nichtionischen Gruppe enthaltenden Verbindung, die ein Isocyanat-reaktives Wasserstoff-Atom enthält,
wobei die hydrophobe Gruppe ein linearer, cyclischer oder verzweigter, gesättigter oder zumindest teilweise ungesättigter Kohlenwasserstoffrest mit 8-24 Kohlenstoffatomen ist.

13. Kit umfassend
(i) mindestens ein blockiertes Polyisocyanat der Formel (I) und/oder (II) wie in einem der Ansprüche 1-7 oder 11 definiert, und
(ii) mindestens ein oleophobierendes und/oder hydrophobierendes Ausrüstungsmittel wie in einem der Ansprüche 8 oder 9 definiert.

14. Verwendung einer Zubereitung nach einem der Ansprüche 1-10, einer Verbindung nach Anspruch 11 oder eines Kits nach Anspruch 13 zur oleophoben und/oder hydrophoben Ausrüstung von Flächengebilden, insbesondere von Textilien.

15. Verfahren zur Ausrüstung von Flächengebilden, insbesondere von Textilien, umfassend die Schritte:
(a) Bereitstellen einer Zubereitung nach einem der Ansprüche 1-10 oder Mischen der Kit-Komponenten (i) und (ii) gemäß Anspruch 13;
(b) Aufbringen der Zubereitung oder der in Schritt (a) erhaltenen Mischung auf ein Flächengebilde; und
(c) thermische Behandlung des Flächengebildes.

16. Oleophob und/oder hydrophob ausgerüstetes Flächengebilde, insbesondere Textil, erhältlich durch
(i) Aufbringen einer Zubereitung nach einem der Ansprüche 1-10 oder einer Mischung der Kit-Komponenten (i) und (ii) gemäß Anspruch 13 auf ein Flächengebilde, insbesondere Textil; und
(ii) thermische Behandlung des Flächengebildes.

## Claims

1. Preparation containing
(i) at least one blocked polyisocyanate of formula (I) 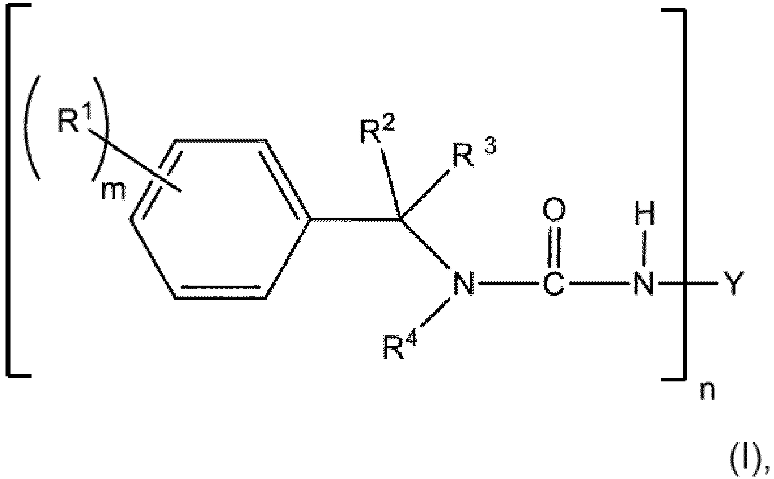 where
R¹ is, independently, hydrogen, C₁-C₄ alkyl or C₆-C₁₀ cycloalkyl, preferably hydrogen,
R² is, independently, hydrogen, C₁-C₄ alkyl or C₆-C₁₀ cycloalkyl, preferably hydrogen,
R³ is, independently, hydrogen, C₁-C₄ alkyl or C₆-C₁₀ cycloalkyl, preferably hydrogen,
R⁴ is, independently, C₁-C₄ alkyl, C₆-C₁₀ cycloalkyl or C₇-C₁₄ aralkyl, preferably methyl, ethyl, propyl, isopropyl, n-butyl, sec-butyl, tert-butyl, more preferably tert-butyl,
m is an integer selected from 1, 2, 3, 4 or 5,
n is a number from 2 to 10, preferably from 2 to 8, more preferably from 2 to 6, and
Y is a polyisocyanate functional group which is substituted with a hydrophobic and optionally an anionic, cationic and/or non-ionic group, where the hydrophobic group is a linear, cyclic or branched, saturated or at least partially unsaturated hydrocarbon functional group having 8-24 carbon atoms; and
(ii) at least one oleophobing and/or hydrophobing finishing agent.

2. Preparation according to any of the preceding claims, where R¹, R² und R³ are each H, and R⁴ is tert-butyl.

3. Preparation according to either claim 1 or claim 2, where the polyisocyanate functional group Y is an aliphatic, cycloaliphatic and/or aromatic hydrocarbon functional group having 6-200 carbon atoms, which group optionally contains at least one urethane, allophanate, urea, biuret, uretdione, isocyanurate, carbodiimide, iminooxadiazindione and/or uretonimine group.

4. Preparation according to any of the preceding claims, wherein the hydrophobic and/or anionic, cationic and/or non-ionic group is bonded to the polyisocyanate functional group via a urethane group and/or via a urea group.

5. Preparation according to any of the preceding claims, wherein the anionic group comprises a carboxylate and/or a sulfonate and the cationic group comprises a quaternary ammonium ion.

6. Preparation according to any of the preceding claims, wherein the non-ionic group comprises a polyalkylene oxide having a weight-average molecular weight of from 200 to 2,000 g/mol, preferably from 400 to 1,000 g/mol.

7. Preparation according to any of the preceding claims, wherein the blocked polyisocyanate has the formula (II) 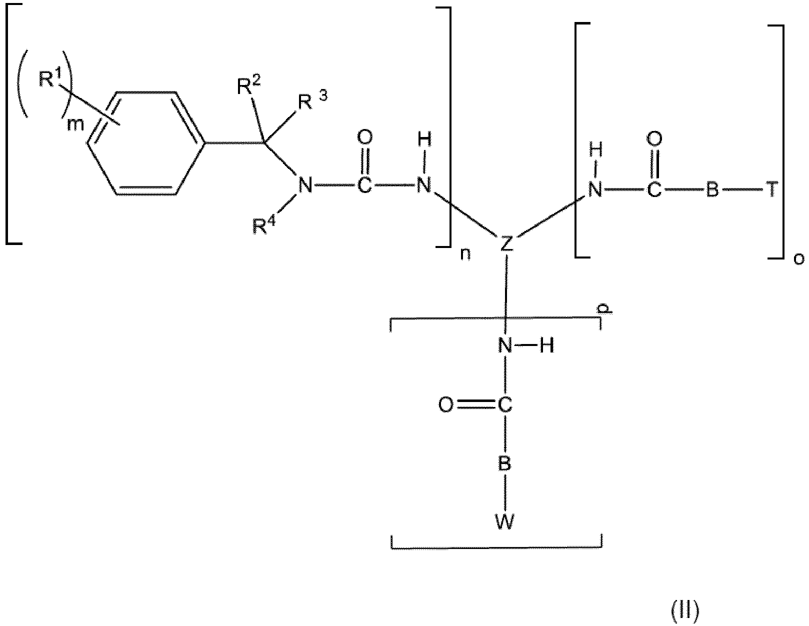 where
Z is a polyisocyanate functional group,
T is a hydrophobic group,
W is a cationic, anionic and/or non-ionic group,
B is -O- and/or -NH-,
o is 0.1 to 4, preferably 0.1 to 1,
p is 0 to 1, preferably 0.1 to 0.5, and
R¹ to R⁴, m and n are defined as above.

8. Preparation according to any of the preceding claims, wherein the oleophobing and/or hydrophobing finishing agent comprises at least one fluorocarbon polymer, which preferably comprises at least one repeating unit of formula (III) 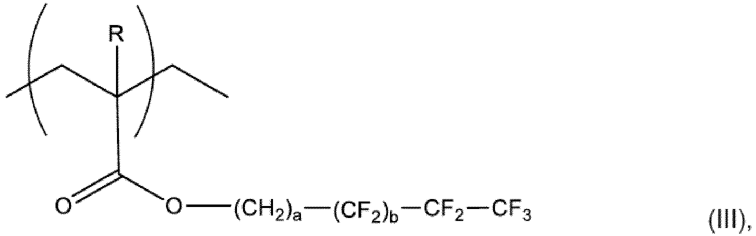 where
R is H or CH₃,
a is an integer between 0 and 6, preferably 2, and
b is an integer between 0 and 6, preferably 4.

9. Preparation according to any of the preceding claims, wherein the hydrophobing finishing agent is fluorine-free and preferably contains wax, poly(meth)acrylate, polyurethane, fatty acid-modified melamine, organopolysiloxane, metal salt of fatty acids, fatty acid condensation products or mixtures thereof.

10. Preparation according to any of the preceding claims, wherein the preparation further comprises at least one organic solvent, water or mixtures thereof.

11. Blocked polyisocyanate of formula (II) 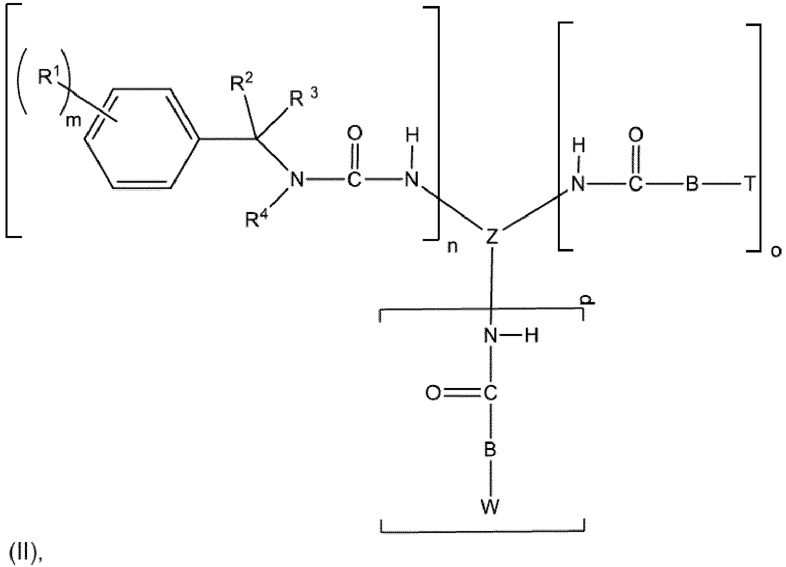
where Z, W, T, B, R¹ to R⁴, m, n, o and p are defined as above,
where the hydrophobic group T is a linear, cyclic or branched, saturated or at least partially unsaturated hydrocarbon functional group having 8-24 carbon atoms.

12. Method for preparing a blocked polyisocyanate of formula (II), comprising the steps of:
(i) providing a polyisocyanate
(ii) reacting the polyisocyanate with benzyl amine of formula (IV) 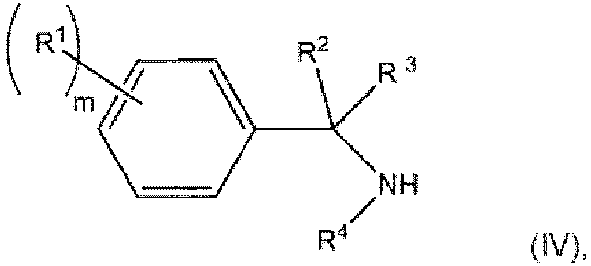 where
R¹ is, independently, hydrogen, C₁-C₄ alkyl or C₆-C₁₀ cycloalkyl, preferably hydrogen,
R² is, independently, hydrogen, C₁-C₄ alkyl or C₆-C₁₀ cycloalkyl, preferably hydrogen,
R³ is, independently, hydrogen, C₁-C₄ alkyl or C₆-C₁₀ cycloalkyl, preferably hydrogen,
R⁴ is, independently, C₁-C₄ alkyl, C₆-C₁₀ cycloalkyl or C₇-C₁₄ aralkyl, preferably methyl, ethyl, propyl, isopropyl, n-butyl, sec-butyl, tert-butyl, more preferably tert-butyl,
m is an integer selected from 1, 2, 3, 4 or 5,
of a hydrophobic compound optionally containing an anionic, cationic and/or non-ionic group, which compound contains an isocyanate-reactive hydrogen atom,
where the hydrophobic group is a linear, cyclic or branched, saturated or at least partially unsaturated hydrocarbon functional group having 8-24 carbon atoms.

13. Kit comprising
(i) at least one blocked polyisocyanate of formula (I) and/or (II) as defined in any of claims 1-7 or 11, and
(ii) at least one oleophobing and/or hydrophobing finishing agent as defined in either claim 8 or claim 9.

14. Use of a preparation according to any of claims 1-10, of a compound according to claim 11 or of a kit according to claim 13 for oleophobically and/or hydrophobically finishing fabrics, in particular textiles.

15. Method for finishing fabrics, in particular textiles, comprising the steps of:
(a) providing a preparation according to any of claims 1-10 or mixing the kit components (i) and (ii) according to claim 13;
(b) applying the preparation or the mixture obtained in step (a) to a fabric; and
(c) thermally treating the fabric.

16. Oleophobically and/or hydrophobically finished fabric, in particular a textile, obtainable by the steps of:
(i) applying a preparation according to any of claims 1-10 or a mixture of the kit components (i) and (ii) according to claim 13 to a fabric, in particular a textile; and
(ii) thermally treating the fabric.

## Revendications

1. Préparation contenant
(i) au moins un polyisocyanate bloqué de formule (I) 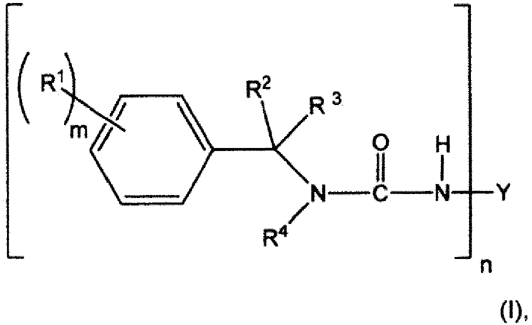 où
les R¹ sont indépendamment les uns des autres l'hydrogène, C₁-C₄-alkyle ou C₆-C₁₀-cycloalkyle, de préférence l'hydrogène,
les R² sont indépendamment les uns des autres l'hydrogène, C₁-C₄-alkyle ou C₆-C₁₀-cycloalkyle, de préférence l'hydrogène,
les R³ sont indépendamment les uns des autres l'hydrogène, C₁-C₄-alkyle ou C₆-C₁₀-cycloalkyle, de préférence l'hydrogène,
les R⁴ sont indépendamment les uns des autres C₁-C₄-alkyle, C₆-C₁₀-cycloalkyle ou C₇-C₁₄-aralkyle, de préférence méthyle, éthyle, propyle, isopropyle, n-butyle, sec-butyle, tert-butyle, de préférence encore tert-butyle,
m est un nombre entier choisi parmi 1, 2, 3, 4 et 5,
n est un nombre de 2 à 10, de préférence de 2 à 8, de préférence encore de 2 à 6, et
Y est un reste d'un polyisocyanate, qui est substitué avec un groupe hydrophobe et éventuellement un groupe anionique, cationique et/ou non ionique, où le groupe hydrophobe est un reste hydrocarboné linéaire, cyclique ou ramifié, saturé ou au moins partiellement insaturé ayant 8-24 atomes de carbone ; et
(ii) au moins un agent d'apprêt rendant oléophobe et/ou hydrophobe.

2. Préparation selon l'une des revendications précédentes, où R¹, R² et R³ sont chacun H et R⁴ est tert-butyle.

3. Préparation selon la revendication 1 ou 2, où le reste de polyisocyanate Y est un reste hydrocarboné aliphatique, cycloaliphatique et/ou aromatique ayant 6-200 atomes de carbone, qui contient éventuellement au moins un groupe uréthane, allophanate, urée, biuret, uretdione, isocyanurate, carbodiimide, iminooxadiazinedione et/ou urétonimine.

4. Préparation selon l'une des revendications précédentes, où le groupe hydrophobe et/ou anionique, cationique et/ou non ionique est lié au reste du polyisocyanate par le biais d'un groupe uréthane et/ou par le biais d'un groupe urée.

5. Préparation selon l'une des revendications précédentes, où le groupe anionique comprend un carboxylate et/ou un sulfonate et le groupe cationique comprend un ion ammonium quaternaire.

6. Préparation selon l'une des revendications précédentes, où le groupe non ionique comprend un poly(oxyde d'alkylène) ayant une masse moléculaire moyenne en poids de 200 - 2000 g/mol, de préférence de 400 - 1000 g/mol.

7. Préparation selon l'une des revendications précédentes, où le polyisocyanate bloqué présente la formule (II) 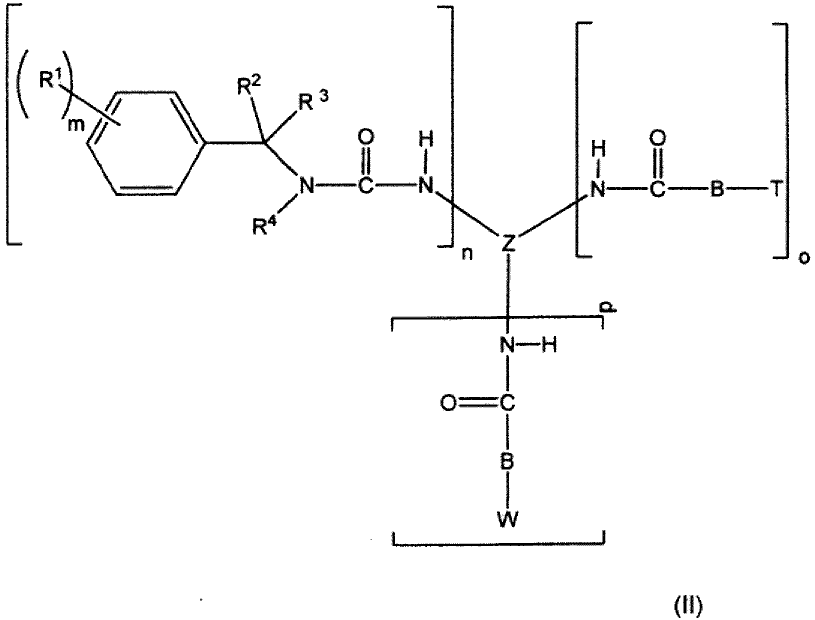 où
Z est un reste d'un polyisocyanate,
T est un groupe hydrophobe,
W est un groupe cationique, anionique et/ou non ionique,
B est -O- et/ou -NH-,
o est 0,1 à 4, de préférence 0,1-1,
p est 0 à 1, de préférence 0,1-0,5, et
R¹ à R⁴, m, n, sont définis comme ci-dessus.

8. Préparation selon l'une des revendications précédentes, où l'agent d'apprêt rendant oléophobe et/ou hydrophobe comprend au moins un polymère fluorocarboné, qui comprend de préférence au moins une unité répétée de formule (III) 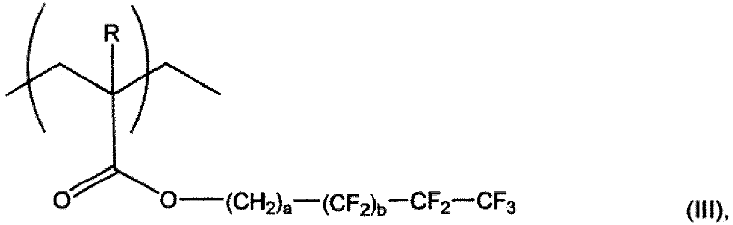 où
R est H ou CH₃,
a est un nombre entier entre 0-6, de préférence 2, et
b est un nombre entier entre 0-6, de préférence 4.

9. Préparation selon l'une des revendications précédentes, où l'agent d'apprêt rendant hydrophobe est sans fluor et contient de préférence une cire, un poly(méth)acrylate, un polyuréthane, une mélamine modifiée avec un ou des acides gras, un organopolysiloxane, un sel métallique d'acides gras, des produits de condensation d'acides gras ou des mélanges de ceux-ci.

10. Préparation selon l'une des revendications précédentes, où la préparation comprend en outre au moins un solvant organique, de l'eau ou des mélanges de ceux-ci.

11. Polyisocyanate bloqué de formule (II) 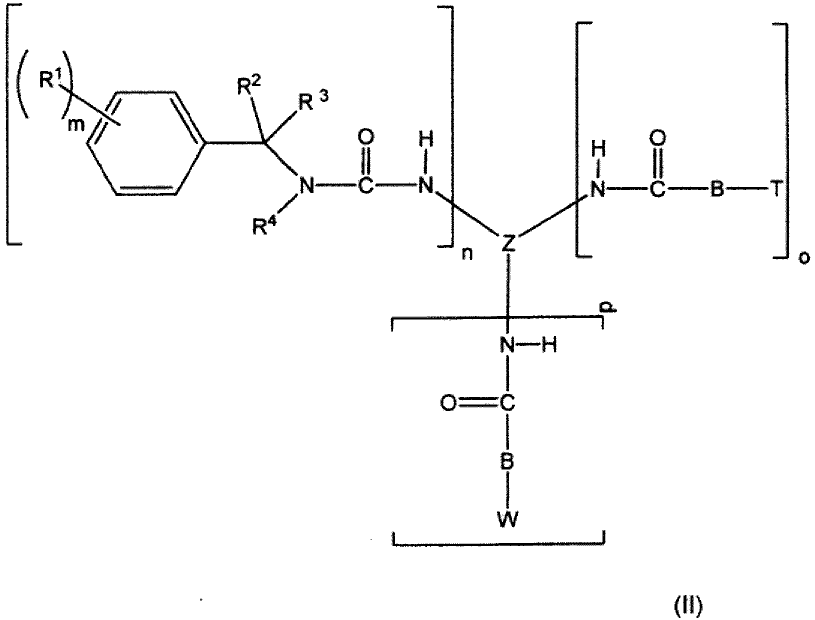
où Z, W, T, B, R¹ à R⁴, m, n, o et p sont définis comme ci-dessus,
où le groupe hydrophobe T est un reste hydrocarboné linéaire, cyclique ou ramifié, saturé ou au moins partiellement insaturé ayant 8-24 atomes de carbone.

12. Procédé pour la production d'un polyisocyanate bloqué de formule (II) comprenant les étapes:
(i) mise à disposition d'un polyisocyanate,
(ii) réaction du polyisocyanate avec une benzylamine de formule (IV) 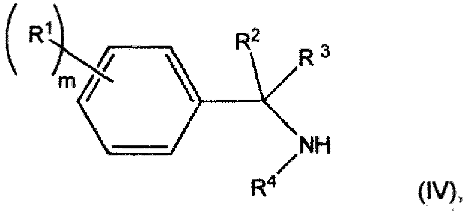 un composé contenant un groupe hydrophobe et éventuellement un groupe anionique, cationique et/ou non ionique, qui contient un atome d'hydrogène réactif avec les isocyanates,
où le groupe hydrophobe est un reste hydrocarboné linéaire, cyclique ou ramifié, saturé ou au moins partiellement insaturé ayant 8-24 atomes de carbone.

13. Kit comprenant
(i) au moins un polyisocyanate bloqué de formule (I) et/ou (II) comme défini dans l'une des revendications 1-7 et 11, et
(ii) au moins un agent d'apprêt rendant oléophobe et/ou hydrophobe comme défini dans l'une des revendications 8 et 9.

14. Utilisation d'une préparation selon l'une des revendications 1-10, d'un composé selon la revendication 11 ou d'un kit selon la revendication 13 pour l'apprêt oléophobe et/ou hydrophobe de produits plans, en particulier de textiles.

15. Procédé pour l'apprêt de produits plans, en particulier de textiles, comprenant les étapes:
(a) mise à disposition d'une préparation selon l'une des revendications 1-10 ou mélange des composants de kit (i) et (ii) selon la revendication 13 ;
(b) application de la préparation ou du mélange obtenu dans l'étape (a) sur un produit plan ; et
(c) traitement thermique du produit plan.

16. Produit plan, en particulier textile, apprêté de manière oléophobe et ou hydrophobe, pouvant être obtenu par
(i) application d'une préparation selon l'une des revendications 1-10 ou d'un mélange des composants de kit (i) et (ii) selon la revendication 13 sur un produit plan, en particulier un textile ; et
(ii) traitement thermique du produit plan.
